(19) Europäisches Patentamt
European Patent Office
Office européen des brevets

(11) **EP 3 052 674 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(51) Int Cl.:
***C23C 18/12*** *(2006.01)*

(21) Anmeldenummer: **13773674.0**

(22) Anmeldetag: **30.09.2013**

(86) Internationale Anmeldenummer:
**PCT/EP2013/070365**

(87) Internationale Veröffentlichungsnummer:
**WO 2015/043680 (02.04.2015 Gazette 2015/13)**

(54) **VERFAHREN ZUR AUTOPHORETISCHEN BESCHICHTUNG VON METALLISCHEN SUBSTRATEN UNTER NACHBEHANDLUNG DER BESCHICHTUNG MIT EINER WÄSSRIGEN SOL-GEL-ZUSAMMENSETZUNG**

METHOD FOR THE AUTOPHORETIC COATING OF METALLIC SUBSTRATES BY POST-TREATING THE COATING WITH AN AQUEOUS SOL-GEL COMPOSITION

PROCÉDÉ PERMETTANT LE REVÊTEMENT AUTOPHORÉTIQUE DE SUBSTRATS MÉTALLIQUES PAR TRAITEMENT POSTÉRIEUR DU REVÊTEMENT AU MOYEN D'UNE COMPOSITION AQUEUSE SOL-GEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.08.2016 Patentblatt 2016/32**

(73) Patentinhaber: **BASF Coatings GmbH**
**48165 Münster (DE)**

(72) Erfinder:
• **SINNWELL, Sebastian**
**40239 Düsseldorf (DE)**
• **MARKOU, Konstantinos**
**50739 Köln (DE)**
• **TROLL, Angelika**
**40593 Düsseldorf (DE)**

(74) Vertreter: **BASF IP Association**
**BASF SE**
**G-FLP-C006**
**67056 Ludwigshafen (DE)**

(56) Entgegenhaltungen:
WO-A1-2011/138290     WO-A2-2007/095927
DE-A1- 19 843 581     DE-A1- 19 909 877
US-B1- 6 733 837

**Beschreibung**

Die vorliegende Erfindung betrifft ein Verfahren zur zumindest teilweisen Beschichtung eines metallischen Substrats umfassend wenigstens eine zumindest teilweise Beschichtung des Substrats mit einer autophoretisch abscheidbaren Beschichtungszusammensetzung (Schritt (1)) und ein Kontaktieren des mit der autophoretisch abgeschiedenen Beschichtungszusammensetzung zumindest teilweise beschichteten Substrats mit einer wässrigen Sol-Gel-Zusammensetzung (Schritt (2)), ein nach diesem Verfahren erhältliches zumindest teilweise beschichtetes Substrat und die Verwendung einer wässrigen Sol-Gel-Zusammensetzung zur Nachbehandlung einer durch eine autophoretische Abscheidung zumindest teilweise auf ein Substrat aufgebrachten Beschichtungszusammensetzung durch Kontaktierung der autophoretisch abgeschiedenen Beschichtungszusammensetzung mit der wässrigen Sol-Gel-Zusammensetzung.

Im Automobilbereich müssen die zur Herstellung eingesetzten metallischen Bauteile üblicherweise gegen Korrosion geschützt werden. Die Anforderungen an den zu erzielenden Korrosionsschutz sind sehr hoch, insbesondere da seitens der Hersteller oftmals über viele Jahre eine Garantie gegen Durchrostung gewährt wird. Solch ein Korrosionsschutz wird üblicherweise durch eine Beschichtung der Bauteile oder der zu ihrer Herstellung eingesetzten Substrate mit wenigstens einer dafür geeigneten Beschichtung erzielt.

Üblicherweise wird in der Automobilindustrie zum Aufbringen einer solchen Beschichtung eine Elektrotauchlackierung der eingesetzten metallischen Bauteile oder Karosserien vorgenommen. Nachteilig an einem solchen Verfahren ist jedoch, dass hierfür elektrische Energie benötigt wird. Zudem ist an einem solchen Verfahren nachteilig, dass die eingesetzten Substrate üblicherweise einer anorganischen Vorbehandlung unterworfen werden müssen, um einen ausreichenden Korrosionsschutz zu gewährleisten. Beispielsweise ist es üblich, einen Phosphatierungsschritt als eine solche Vorbehandlung der Elektrotauchlackierung vorzuschalten, in dem das zu beschichtende Substrat nach einem optionalen Reinigungsschritt und vor einem Tauchlackierungsschritt mit einem Metallphosphat wie Zinkphosphat behandelt wird, um einen ausreichenden Korrosionsschutz zu gewährleisten. Diese Vorbehandlung beinhaltet üblicherweise die Durchführung mehrerer Verfahrensschritte in mehreren verschiedenen und unterschiedlich beheizten Tauchbecken. Zudem fallen bei der Durchführung einer solchen Vorbehandlung Abfallschlämme an, die die Umwelt belasten und entsorgt werden müssen. Es ist daher insbesondere aus ökonomischen und ökologischen Gründen wünschenswert, einen solchen Vorbehandlungsschritt einsparen zu können, aber dennoch zumindest die gleiche Korrosionsschutzwirkung zu erzielen, die mit den bekannten Verfahren erzielt wird. Zudem ist es insbesondere aus ökonomischen Gründen wünschenswert, auf den Einsatz von elektrischer Energie und damit auf die Elektrotauchlackierung per se verzichten zu können.

Verfahren, die eine stromfreie und selbstabscheidende, d.h. eine autophoretische Beschichtung verschiedener metallischer Substrate ohne Anlegen einer äußeren Spannung ermöglichen, sind bereits im Stand der Technik bekannt, beispielsweise aus US 2004/043155 A1, EP 0 716 627 B1, WO 2008/036259 A1, WO 2011/029680 A1, WO 2011/138290 A1 und WO 2012/174424 A1. Diese Verfahren bieten im Vergleich zur Elektrotauchlackierung somit insbesondere den Vorteil eines einfacher durchzuführenden und preiswerteren Verfahrens sowie einer kürzeren Verfahrensdauer.

Üblicherweise erfolgt auf die autophoretische Beschichtung eine Nachbehandlung der abgeschiedenen autophoretischen Beschichtung mit einer wässrigen Lösung, um einen ausreichenden Korrosionsschutz gewährleisten zu können. Aus dem europäischen Patent EP 0 716 627 B1 und zudem aus WO 2011/029680 A1 ist eine solche Nachspülung mit einer wässrigen Lösung bekannt, die Hexafluorozirkonsäure oder ein entsprechendes Salz dieser Säure enthält. Nachteilig an derartigen wässrigen Lösungen ist jedoch insbesondere aus ökologischen Gründen deren Gehalt an Fluoriden. Zudem genügen die mittels einer solchen wässrigen Hexafluorozirkonsäure-haltigen Lösung nachbehandelten autophoretisch beschichteten Substrate oftmals nicht der Anforderung eines ausreichenden Korrosionsschutzes.

Aus DE 199 09 877 A1 und US 6,733,837 B1 sind Sol-Gel-Überzüge bekannt. Aus WO 2007/095927 A1 sind organisch modifizierte Polysiloxanschichten bekannt.

Es besteht daher ein Bedarf an einem Verfahren zur zumindest teilweisen Beschichtung eines metallischen Substrats, welches ökonomischer und ökologischer durchgeführt werden kann als die bekannten Verfahren, aber dennoch zumindest in gleichem Maße dazu geeignet ist, die erforderliche Korrosionsschutzwirkung zu erzielen.

Eine Aufgabe der vorliegenden Erfindung ist es daher, ein Verfahren zur zumindest teilweisen Beschichtung eines metallischen Substrats zur Verfügung zu stellen, welches gegenüber dem aus dem Stand der Technik bekannten Verfahren Vorteile aufweist. Insbesondere ist es eine Aufgabe der vorliegenden Erfindung, ein solches Verfahren zur Verfügung zu stellen, welches anstelle einer Elektrotauchlackierung eine autophoretische Abscheidung der entsprechend eingesetzten Beschichtungszusammensetzung ermöglicht, aber mit welchem gegenüber aus dem Stand der Technik bekannten autophoretischen Abscheidungsverfahren die zumindest gleiche und vorzugsweise eine verbesserte Korrosionsschutzwirkung erzielt werden kann, wobei das Verfahren dabei insbesondere zudem unter ökologischen Gesichtspunkten ohne den Einsatz einer Fluorid-haltigen Nachspül-Lösung auskommen soll.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher ein Verfahren zur zumindest teilweisen Beschichtung eines metallischen Substrats umfassend wenigstens die Schritte

(1) zumindest teilweise autophoretische Beschichtung des Substrats mit einer autophoretisch abscheidbaren Beschichtungszusammensetzung (I), und

(2) Kontaktieren des mit der autophoretisch abgeschiedenen Beschichtungszusammensetzung (I) zumindest teilweise beschichteten Substrats mit einer wässrigen Zusammensetzung unter Filmbildung,

dadurch gekennzeichnet, dass die die in Schritt (2) eingesetzte wässrige Zusammensetzung eine wässrige Sol-Gel-Zusammensetzung (II) ist, welche erhalten wird durch Umsetzung wenigstens einer Ausgangsverbindung, welche wenigstens ein Metallatom und/oder Halbmetallatom und wenigstens zwei hydrolysierbare Gruppen aufweist, und welche ferner wenigstens einen nicht hydrolysierbaren organischen Rest aufweist, mit Wasser, und dass die Durchführung des Schritts (2) vor einer Aushärtung der autophoretisch abgeschiedenen Beschichtung erfolgt.

Es wurde überraschend gefunden, dass das erfindungsgemäße Verfahren gegenüber üblicherweise verwendeten Verfahren, welche anstelle einer autophoretischen Abscheidung eine Elektrotauchlackierung vorsehen, insgesamt sowohl ökonomischer, insbesondere weniger zeit- und kosten-intensiv, als auch ökologischer gestaltet werden kann.

Es wurde ferner überraschend gefunden, dass mittels des erfindungsgemäßen Verfahrens umfassend wenigstens Schritt (1) und (2) hergestellte zumindest teilweise beschichtete Substrate insbesondere aufgrund der Kontaktierung gemäß Schritt (2) - im Vergleich zu durch herkömmliche Verfahren erhaltene Substrate , die keinen erfindungsgemäßen Schritt (2) vorsehen, - bezüglich der Korrosionsschutzwirkung der Beschichtungen aber zumindest keine Nachteile und insbesondere Vorteile aufweisen: so zeichnen sich die mittels des erfindungsgemäßen Verfahrens hergestellten beschichteten Substrate, insbesondere beschichtete verzinkte Stähle, gegenüber entsprechenden Vergleichsbeispielen insbesondere dadurch aus, dass die Unterwanderung als Maß für eine Korrosionsschutzwirkung im Fall der mittels des erfindungsgemäßen Verfahrens umfassend insbesondere Schritt (2) hergestellten beschichteten Substrate signifikant geringer ausfällt. Dabei wurde insbesondere überraschenderweise gefunden, dass auch gegenüber mittels eines autophoretischen Verfahrens zumindest teilweise beschichteten Substraten, die im Anschluss an diese Beschichtung mit einer Fluorid-haltigen Lösung nachbehandelt werden, eine solche verbesserte Korrosionsschutzwirkung erzielt werden kann.

Zudem wurde insbesondere überraschenderweise gefunden, dass mit der erfindungsgemäß im Schritt (2) des erfindungsgemäßen Verfahrens eingesetzten wässrigen Sol-Gel-Zusammensetzung (II), insbesondere mit einer wenigstens eine reaktive funktionelle Gruppe aufweisenden Sol-Gel-Zusammensetzung (II), eine Filmbildung erzielt werden kann und zudem die Ausbildung kovalenter Bindungen durch Reaktion mit reaktiven funktionellen Gruppen von geeigneten in der Beschichtungszusammensetzung (I) enthaltenen Komponenten wie Bindemittel und gegebenenfalls Vernetzungsmittel ausgebildet werden können, was im Fall einer Nachbehandlung mit beispielsweise aus dem europäischen Patent EP 0 716 627 B1 und zudem aus WO 2011/029680 A1 bekannten wässrigen Lösungen, die Hexafluorozirkonsäure oder ein entsprechendes Salz dieser Säure enthalten, nicht erzielt werden kann.

Der Begriff "umfassend" im Sinne der vorliegenden Erfindung, beispielsweise in Zusammenhang mit der erfindungsgemäß eingesetzten autophoretisch abscheidbaren Beschichtungszusammensetzung (I) und der wässrigen Sol-Gel-Zusammensetzung (II), hat in einer bevorzugten Ausführungsform die Bedeutung "bestehend aus". Dabei können hinsichtlich der erfindungsgemäß eingesetzten Beschichtungszusammensetzung (I) und der wässrigen Sol-Gel-Zusammensetzung (II) in dieser bevorzugten Ausführungsform jeweils eine oder mehrere der weiteren nachstehend genannten optional in der jeweiligen erfindungsgemäß eingesetzten Zusammensetzung enthaltenen Komponenten enthalten sein. Alle Komponenten können dabei jeweils in ihren vorstehend und nachstehend genannten bevorzugten Ausführungsformen in der erfindungsgemäß eingesetzten Beschichtungszusammensetzung (I) bzw. der wässrigen Sol-Gel-Zusammensetzung (II) enthalten sein.

## Substrat

Als erfindungsgemäß eingesetztes metallisches Substrat eignen sich alle üblicherweise eingesetzten und dem Fachmann bekannten metallischen Substrate. Der Begriff "metallisch" umfasst dabei vorzugsweise Metalle und Legierungen. In einer bevorzugten Ausführungsform ist das erfindungsgemäß eingesetzte metallische Substrat ein Substrat, welches vollständig aus Metallen und/oder Legierungen bestehend. Bevorzugt handelt es sich um unedle Metalle oder Legierungen, welche üblicherweise als metallische Konstruktionswerkstoffe eingesetzt werden und die vor Korrosion geschützt werden müssen. Vorzugsweise sind die erfindungsgemäß eingesetzten Substrate ausgewählt aus der Gruppe bestehend aus Stahl, vorzugsweise Stahl ausgewählt aus der Gruppe bestehend aus kalt gewalztem Stahl, verzinktem Stahl wie tauchverzinktem Stahl, legierungsverzinktem Stahl (wie beispielsweise Galvalume, Galvannealed oder Galfan) und aluminiertem Stahl, Aluminium und Magnesium, insbesondere eignen sich verzinkter Stahl und Aluminium. Zudem eignen sich als Substrate warmgewalzter Stahl, hochfester Stahl, Zn/Mg-Legierungen und Zn/Ni-Legierungen. Als Substrate eignen sich insbesondere Teile von Karosserien oder vollständige Karosserien von zu produzierenden Automobilen. Das erfindungsgemäße Verfahren kann auch zur Bandbeschichtung (Coil-Coating) eingesetzt werden. Bevor das jeweilige Substrat im erfindungsgemäßen Verfahren eingesetzt wird, erfolgt vorzugsweise eine Reinigung und/oder Entfettung des Substrats.

Vorzugsweise ist das erfindungsgemäße Verfahren ein Verfahren zur zumindest teilweisen Beschichtung eines im und/oder für den Automobilbau eingesetzten metallischen, vorzugsweise elektrisch leitfähigen, Substrats. Das Verfahren kann kontinuierlich wie beispielsweise im Coil-Coating-Verfahren oder diskontinuierlich erfolgen.

Das im erfindungsgemäßen Verfahren eingesetzte metallische Substrat ist ein unbehandeltes Substrat, d.h. ein Substrat, welches keinem Vorbehandlungsschritt wie beispielsweise einem anorganischen Vorbehandlungsschritt unterworfen worden ist. Insbesondere ist das erfindungsgemäß eingesetzte metallische Substrat kein mit wenigstens einem Metallphosphat vorbehandeltes Substrat und kein Substrat, welches mit einer wässrigen Vorbehandlungs-Zusammensetzung (B) umfassend wenigstens eine wasserlösliche Verbindung (B1), welche wenigstens ein Ti-Atom und/oder wenigstens ein Zr-Atom enthält, und wenigstens eine wasserlösliche Verbindung (B2) als Quelle für Fluorid-Ionen, welches wenigstens ein Fluor-Atom enthält, oder mit einer wässrigen Vorbehandlungs-Zusammensetzung (B) umfassend wenigstens eine wasserlösliche Verbindung (B3), welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist, vorbehandelt ist.

**Schritt (1)**

Schritt (1) des erfindungsgemäßen Verfahrens umfasst eine zumindest teilweise autophoretische Beschichtung des eingesetzten metallischen Substrats mit einer autophoretisch abscheidbaren Beschichtungszusammensetzung (I).

Schritt (1) des erfindungsgemäßen Verfahrens wird vorzugsweise in einem Tauchlackbad durchgeführt, welches die Beschichtungszusammensetzung (I) enthält.

Vorzugsweise erfolgt in Schritt (1) des erfindungsgemäßen Verfahrens eine vollständige Beschichtung des Substrats mit der autophoretisch abscheidbaren Beschichtungszusammensetzung (I) durch eine autophoretische Abscheidung der Beschichtungszusammensetzung (I) auf der gesamten Substratoberfläche.

Vorzugsweise wird in Schritt (1) des erfindungsgemäßen Verfahrens ein zumindest teilweise zu beschichtendes Substrat zumindest teilweise, vorzugsweise vollständig, in ein Tauchlackbad eingeführt und in diesem Tauchlackbad Schritt (1) durchgeführt.

Schritt (1) des erfindungsgemäßen Verfahrens wird vorzugsweise bei einer Tauchbadtemperatur in einem Bereich von 20 bis 45°C oder von 20°C bis 40°C, noch bevorzugter in einem Bereich von 22 bis 40°C, besonders bevorzugt in einem Bereich von 24 bis 39°C, ganz besonders bevorzugt in einem Bereich von 26 bis 36°C, insbesondere bevorzugt in einem Bereich von 27 bis 33°C wie beispielsweise in einem Bereich von 28 bis 32°C durchgeführt. In einer anderen bevorzugten Ausführungsform des erfindungsgemäßen Verfahrens wird Schritt (1) bei einer Tauchbadtemperatur von höchstens 40°C, noch bevorzugter von höchstens 38°C, besonders bevorzugt von höchstens 35°C, ganz besonders bevorzugt von höchstens 34°C oder von höchstens 33°C oder von höchstens 32°C oder von höchstens 31°C oder von höchstens 30°C oder von höchstens 29°C oder von höchstens 28°C, durchgeführt. In einer weiteren anderen bevorzugten Ausführungsform des erfindungsgemäßen Verfahrens wird Schritt (1) bei einer Tauchbadtemperatur $\leq$ 32°C wie beispielsweise $\leq$ 31°C oder $\leq$ 30°C oder $\leq$ 29°C oder $\leq$ 28°C oder s 27°C oder s 26°C oder $\leq$ 25°C oder $\leq$ 24°C oder $\leq$ 23°C durchgeführt.

Vorzugsweise wird Schritt (1) über eine Zeitdauer im Bereich von 30 bis 300 Sekunden, besonders bevorzugt von 45 bis 250 Sekunden, ganz besonders bevorzugt von 60 bis 200 Sekunden, durchgeführt.

In einer besonders bevorzugten Ausführungsform erfolgt Schritt (1) bei einer Temperatur im Bereich von 20 bis 40°C für eine Zeitdauer im Bereich von 30 bis 300 Sekunden. Die Temperatur ist dabei vorzugsweise die Tauchbadtemperatur.

Vorzugsweise wird die autophoretisch abscheidbare Beschichtungszusammensetzung (I) in Schritt (1) des erfindungsgemäßen Verfahrens so appliziert, dass die resultierende Lackschicht eine Trockenschichtdicke im Bereich von 5 bis 40 $\mu$m, besonders bevorzugt von 10 bis 30 $\mu$m, aufweist.

**Autophoretisch abscheidbare Beschichtungszusammensetzung (I)**

Vorzugsweise handelt es sich bei der erfindungsgemäß eingesetzten autophoretisch abscheidbaren Beschichtungszusammensetzung (I) um eine wässrige Beschichtungszusammensetzung (I).

Die erfindungsgemäß eingesetzte Beschichtungszusammensetzung (I) eignet sich zur zumindest teilweisen Beschichtung eines metallischen Substrats mit einem autophoretisch abscheidbaren Tauchlack, d.h. sie ist dazu geeignet, zumindest teilweise in Form einer entsprechenden Tauchlackschicht auf die Substratoberfläche eines metallischen Substrats aufgebracht zu werden.

Die erfindungsgemäß eingesetzte Beschichtungszusammensetzung (I) enthält vorzugsweise als flüssiges Verdünnungsmittel Wasser.

Unter dem Begriff "wässrig" im Zusammenhang mit der erfindungsgemäß eingesetzten Beschichtungszusammensetzung (I) werden vorzugsweise solche flüssigen Beschichtungszusammensetzungen verstanden, die - als flüssiges Verdünnungsmittel, d.h. als flüssiges Lösemittel und/oder Dispergiermittel - Wasser als Hauptkomponente enthalten. Gegebenenfalls können die entsprechenden Beschichtungszusammensetzungen jedoch wenigstens ein organisches Lösemittel in geringen Anteilen enthalten. Als Beispiele für solche organischen Lösemittel seien heterocyclische, aliphatische oder aromatische Kohlenwasserstoffe, ein- oder mehrwertige Alkohole, insbesondere Methanol und/oder Ethanol und/oder Butanol, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Methylisobutylketon, Aceton, Isophoron oder Mischungen davon genannt. Vorzugsweise beträgt der Anteil dieser organischen Lösemittel höchstens 20,0 Gew.-%, besonders bevorzugt höchstens 15,0 Gew.-%, ganz besonders bevorzugt höchstens 10,0 Gew.-%, insbesondere höchstens 5,0 Gew.-% oder höchstens 4,0 Gew.-% oder höchstens 3,0 Gew.-%, noch bevorzugter höchstens 2,5 Gew.-% oder höchstens 2,0 Gew.-% oder höchstens 1,5 Gew.-%, am meisten bevorzugt höchstens 1,0 Gew.-% oder höchstens 0,5 Gew.-%, jeweils bezogen auf den Gesamtanteil der in der Beschichtungszusammensetzung (I) enthaltenen flüssigen Verdünnungsmitteln, d.h. flüssigen Lösemitteln und/oder Dispergiermitteln.

Die Anteile in Gew.-% aller in der erfindungsgemäß eingesetzten Beschichtungszusammensetzung (I) enthaltenen Komponenten, addieren sich vorzugsweise auf 100 Gew.-%, bezogen auf das Gesamtgewicht der Beschichtungszusammensetzung (I).

Vorzugsweise weist die erfindungsgemäß eingesetzte Beschichtungszusammensetzung (I) einen Festkörper-Anteil im Bereich von 0,5 bis 15 Gew.-%, besonders bevorzugt im Bereich von 1 bis 12 Gew.-%, ganz besonders bevorzugt von 1,5 bis 10 Gew.-%, noch bevorzugter im Bereich von 2 bis 9 Gew.-% oder im Bereich von 2 bis 8 Gew.-%, insbesondere von 3 bis 7 Gew.-%, jeweils bezogen auf das Gesamtgewicht der erfindungsgemäß eingesetzten Beschichtungszusammensetzung (I) auf. Bestimmungsmethoden zur Bestimmung des Festkörper-Anteils sind dem Fachmann bekannt. Vorzugsweise wird der Festkörper-Anteil gemäß DIN EN ISO 3251 (Datum: 1.6.2008) bestimmt.

Die erfindungsgemäß eingesetzte Beschichtungszusammensetzung (I) ist vorzugsweise eine wässrige Lösung oder Dispersion wenigstens eines autophoretisch abscheidbaren Bindemittels und gegebenenfalls wenigstens eines Vernetzungsmittels.

Der Begriff "Bindemittel" als Bestandteil der Beschichtungszusammensetzung (I) umfasst im Sinne der vorliegenden Erfindung vorzugsweise die für eine Filmbildung verantwortlichen autophoretisch abscheidbaren polymeren Harze der Beschichtungszusammensetzung (I), wobei jedoch gegebenenfalls vorhandenes Vernetzungsmittel nicht vom Begriff des Bindemittels mit eingeschlossen ist. Vorzugsweise ist ein "Bindemittel" im Sinne der vorliegenden Erfindung daher ein polymeres Harz, wobei jedoch gegebenenfalls vorhandenes Vernetzungsmittel nicht vom Begriff des Bindemittels mit eingeschlossen ist. Insbesondere werden zudem gegebenenfalls vorhandene Pigmente und Füllstoffe nicht unter den Begriff des Bindemittels subsumiert.

Das wenigstens eine autophoretisch abscheidbare Bindemittel ist vorzugsweise ein in Wasser lösbares oder dispergierbares Bindemittel, d.h. ein in Wasser lösbares oder dispergierbares polymeres Harz.

Vorzugsweise wird zur Herstellung der Beschichtungszusammensetzung (I) als autophoretisch abscheidbares Bindemittel und gegebenenfalls vorhandenes Vernetzungsmittel eine wässrige Dispersion oder Lösung, vorzugsweise Dispersion, des wenigstens einen Bindemittels und des gegebenenfalls vorhandenen wenigstens einen Vernetzungsmittels eingesetzt, welche einen Festkörper-Anteil im Bereich von 5 bis 60 Gew.-%, besonders bevorzugt im Bereich von 10 bis 55 Gew.-%, ganz besonders bevorzugt von 15 bis 50 Gew.-%, noch bevorzugter im Bereich von 20 bis 45 Gew.-% oder im Bereich von 25 bis 40 Gew.-%, insbesondere von 30 bis 40 Gew.-%, jeweils bezogen auf das Gesamtgewicht dieser erfindungsgemäß eingesetzten wässrigen Lösung oder Dispersion, aufweist. Bestimmungsmethoden zur Bestimmung des Festkörper-Anteils sind dem Fachmann bekannt. Vorzugsweise wird der Festkörper-Anteil gemäß DIN EN ISO 3251 (Datum: 1.6.2008) bestimmt.

Alle üblichen dem Fachmann bekannten autophoretisch abscheidbaren Bindemittel eignen sich dabei als Bindemittel-Komponente der Beschichtungszusammensetzung (I).

Die erfindungsgemäß eingesetzte Beschichtungszusammensetzung (I) umfasst vorzugsweise wenigstens ein Bindemittel, welches reaktive funktionelle Gruppen aufweist, die eine Vernetzungsreaktion ermöglichen. Das Bindemittel ist dabei ein selbst-vernetzendes oder ein fremd-vernetzendes Bindemittel, vorzugsweise ein fremd-vernetzendes Bindemittel. Um eine Vernetzungsreaktion zu ermöglichen, enthält die erfindungsgemäß eingesetzte Beschichtungs-zusammensetzung (I) daher neben dem wenigstens einen Bindemittel vorzugsweise zudem wenigstens ein Vernetzungsmittel.

Jede übliche dem Fachmann bekannte vernetzbare reaktive funktionelle Gruppe kommt dabei in Betracht. Vorzugsweise weist das Bindemittel reaktive funktionelle Gruppen ausgewählt aus der Gruppe bestehend aus Hydroxyl-Gruppen, Thiol-Gruppen, Carboxyl-Gruppen, Gruppen, welche wenigstens eine C=C-Doppelbindung, wie beispielsweise Vinyl-Gruppen oder (Meth)acrylat-Gruppen, und Epoxid-Gruppen auf. Insbesondere bevorzugt sind Hydroxyl-Gruppen, Carboxyl-Gruppen und/oder Epoxid-Gruppen.

Der Ausdruck "(Meth)acryl" bzw. "(Meth)acrylat" umfasst im Sinne der vorliegenden Erfindung jeweils die Bedeutungen "Methacryl" und/oder "Acryl" bzw. "Methacrylat" und/oder "Acrylat".

Das in der erfindungsgemäß eingesetzten Beschichtungszusammensetzung (I) enthaltene Bindemittel bzw. das gegebenenfalls enthaltene Vernetzungsmittel ist vorzugsweise thermisch vernetzbar und/oder durch Strahlenhärtung, beispielsweise durch Einsatz von UV-Strahlung, vernetzbar. Vorzugsweise sind das Bindemittel und das gegebenenfalls enthaltene Vernetzungsmittel beim Erwärmen auf Temperaturen oberhalb Raumtemperatur, d.h. oberhalb von 18-23°C vernetzbar. Vorzugsweise sind das Bindemittel und das gegebenenfalls enthaltene Vernetzungsmittel erst bei Ofentemperaturen ≥ 80°C, bevorzugter ≥ 110°C, besonders bevorzugt ≥ 130°C und ganz besonders bevorzugt ≥ 140°C vernetzbar. Besonders vorteilhaft sind das Bindemittel das gegebenenfalls enthaltene Vernetzungsmittel bei 100 bis 250°C, noch bevorzugter bei 125 bis 250°C und besonders bevorzugt bei 150 bis 250°C vernetzbar.

Autophoretisch abscheidbare Beschichtungszusammensetzungen und Bindemittel, sind dem Fachmann bekannt, beispielsweise aus US 2004/043155 A1, EP 0 716 627 B1, WO 2008/036259 A1, WO 2011/029680 A1 und WO 2012/174424 A1.

Vorzugsweise ist das in der erfindungsgemäß eingesetzten Beschichtungszusammensetzung (I) eingesetzte Bindemittel wenigstens ein polymeres Harz ausgewählt aus der Gruppe bestehend aus Epoxid-basierten Harzen, Styrol-Butadien basierten Harzen, Acrylnitril-Butadien-basierten Harzen, Polyolefinen, insbesondere Polyethylen, (Meth)acryl-basierten Harzen, Polyvinylchlorid, Styrol-Acrylat-basierten Harzen, Styrol-Epoxid-basierten Harzen, Polyurethanen, Styrol-Epoxid-Acryl-basierten Harzen und polymeren Harze basierend auf Tetrafluoroethylen. Insbesondere bevorzugt ist ein Styrol-Epoxid-Acrylbasiertes polymeres Harz.

Vorzugsweise ist das in der erfindungsgemäß eingesetzten Beschichtungszusammensetzung (I) eingesetzte Bindemittel ein anionischstabilisiertes Bindemittel.

Vorzugsweise ist das in der erfindungsgemäß eingesetzten Beschichtungszusammensetzung (I) eingesetzte Bindemittel ein Copolymer und/oder Polymergemisch, welches erhältlich ist durch Copolymerisation, vorzugsweise Emulsion-Copolymerisation, von wenigstens einem ethylenisch ungesättigten Monomer in Gegenwart wenigstens eines polymeren Epoxid-Harzes oder wenigstens eines polymeren Epoxid-basierten Harzes.

Besonders bevorzugt ist das in der erfindungsgemäß eingesetzten Beschichtungszusammensetzung (I) eingesetzte Bindemittel ein Copolymer und/oder Polymergemisch, welches erhältlich ist durch Copolymerisation, vorzugsweise Emulsion-Copolymerisation, von wenigstens einem wenigstens eine Vinyl-Gruppe aufweisendem Monomer und wenigstens einem gegebenenfalls wenigstens eine gegenüber einer Isocyanat-Gruppe reaktive funktionelle Gruppe wie beispielsweise eine OH-Gruppe aufweisendem Alkyl(meth)acrylat-Monomer, insbesondere wenigstens einem wenigstens eine OH-Gruppe aufweisendem Alkyl(meth)acrylat-Monomer und wenigstens einem Alkyl(meth)acrylat-Monomer, welches einen unsubstituierten Alkyl-Rest aufweist, sowie gegebenenfalls wenigstens einem weiteren Monomer (M1), welches von den vorstehend genannten Monomeren verschieden ist, in Gegenwart wenigstens eines polymeren Epoxid-Harzes oder wenigstens eines polymeren Epoxid-basierten Harzes.

Alkyl(meth)acrylate-Monomere sind diesbezüglich vorzugsweise Alkyl(meth)acrylate von unverzweigten oder verzweigten aliphatischen Alkoholen mit 1 bis 22, vorzugsweise 1 bis 12, Kohlenstoffatomen wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, wobei die AlkylReste dieser (Meth)acrylate jeweils gegebenenfalls wenigstens eine OH-Gruppe aufweisen können. Beispiele solcher wenigstens eine OH-Gruppe aufweisenden Alkyl(meth)acrylate sind insbesondere Hydroxyethyl(meth)acrylat, Hydroxypropyl(meth)acrylat und Hydroxybutyl(meth)acrylat,

Wenigstens eine Vinyl-Gruppe aufweisende Monomere sind diesbezüglich insbesondere ausgewählt aus der Gruppe bestehend aus Styrol und substituierten Styrolen, vorzugsweise alpha-Methylstyrol und/oder oder 4-Methylstyrol, Vinylgruppen aufweisenden vorzugsweise nicht basischen, cycloaliphatischen heterozyklischen Verbindungen mit wenigstens einem N-Atom als Ringglied, wie beispielsweise N-Vinylpyrrolidon und/oder N-Vinylcaprolactam, Vinylgruppen aufweisenden vorzugsweise nicht basischen, heteroaromatischen Verbindungen mit wenigstens einem N-Atom als Ringglied, wie beispielsweise 4-Vinylpyridin, 2-Vinylpyridin oder Vinylimidazol, und Vinylester von Mono-Carbonsäuren, vorzugsweise von Mono-Carbonsäuren mit 1 bis 20 Kohlenstoffatomen, wie beispielsweise Vinylacetat.

Das weitere Monomer (M1) ist dabei vorzugsweise ausgewählt aus der Gruppe bestehend aus Cycloalkyl(meth)acrylaten, Aryl(meth)acrylaten, Alkylaryl(meth)acrylaten, Alkyl(meth)acrylamiden, Cycloalkyl(meth)acrylamiden, Aryl(meth)acrylamiden, Alkylaryl(meth)acrylamiden, (Meth)acrylnitril, (Meth)acrylsäure sowie Allylalkohol, Vinylalkohol, Hydroxyalkylvinylethern und Hydroxyalkylallylethern.

Cycloalkyl(meth)acrylate sind diesbezüglich vorzugsweise Cycloalkyl(meth)acrylate von cycloaliphatischen Alkoholen mit 3 bis 22, vorzugsweise 3 bis 12, Kohlenstoffatomen wie zum Beispiel Cyclohexyl(meth)acrylat oder Isobornyl(meth)acrylat.

Aryl(meth)acrylate sind diesbezüglich vorzugsweise Aryl(meth)acrylate von aromatischen Alkoholen mit 6 bis 22, vorzugsweise 6 bis 12, Kohlenstoffatomen, wobei die Aryl-Reste jeweils unsubstituiert oder bis zu vierfach substituiert sein können, wie zum Beispiel 4-Nitrophenylmethacrylat oder Phenyl(meth)acrylat.

Alkylaryl(meth)acrylate sind diesbezüglich vorzugsweise Alkylaryl(meth)acrylate von Alkoholen mit 6 bis 22, vorzugsweise 6 bis 12, Kohlenstoffatomen, die sowohl einen aliphatischen als auch einen aromatischen Rest aufweisen, wobei die Aryl-Reste jeweils unsubstituiert oder bis zu vierfach substituiert sein können, wie zum Beispiel Benzyl(meth)acrylat.

Insbesondere bevorzugt ist das in der erfindungsgemäß eingesetzten Beschichtungszusammensetzung (I) eingesetzte Bindemittel ein Copolymerisat und/oder Polymergemisch, welches erhältlich ist durch Copolymerisation, vorzugsweise Emulsion-Copolymerisation, von Styrol, wenigstens einem wenigstens eine OH-Gruppe aufweisendem Alkyl(meth)acrylat-Monomer, wenigstens einem Alkyl(meth)acrylat-Monomer, welches einen unsubstituierten Alkyl-Rest aufweist, und wenigstens einem weiteren Monomer (M1), welches vorzugsweise ausgewählt ist aus der Gruppe bestehend aus Cycloalkyl(meth)acrylaten und (Meth)acrylsäure in Gegenwart wenigstens eines polymeren Epoxid-Harzes und/oder wenigstens eines polymeren Epoxid-basierten Harzes.

Unter Epoxid-basierten Harzen und/oder Epoxid-Harzen werden vorzugsweise Polyepoxide mit zwei oder mehr Epoxid-Gruppen verstanden. Besonders bevorzugte Polyepoxide sind dabei aus Polyphenolen und Epihalohydrinen hergestellte Polyglycidylether von Polyphenolen. Als Polyphenole können insbesondere Bisphenol A und/oder Bisphenol F eingesetzt werden. Weitere geeignete Polyepoxide sind Polyglycidylether von mehrwertigen Alkoholen, wie z. B. Ethylenglykol, Diethylenglykol, Triethylenglykol, 1,2-Propylenglykol- 1-4-Propylenglykol, 1,5-Pentandiol, 1,2,6-Hexantriol, Glycerin und Bis-(4-hydroxycyclohexyl)2,2propan.

Vorzugsweise ist das in der erfindungsgemäß eingesetzten Beschichtungszusammensetzung (I) eingesetzte Bindemittel erhältlich durch

(a) Mischen wenigstens eines Epoxid-basierten Harzes und/oder Epoxid-Harzes mit wenigstens einem ethylenisch ungesättigten Monomer,
(b) Dispergieren der Mischung von Schritt (a) in Wasser mit mindestens einer oberflächenaktiven Verbindung, um eine feinteilige Dispersion zu bilden; und
(c) (Co)-Polymerisieren des mindestens einen ethylenisch ungesättigten Monomers, in Gegenwart des wenigstens einen Epoxid-basierten Harzes und/oder Epoxid-Harzes,

wobei mindestens ein wasserlöslicher Initiator und/oder mindestens ein organisch löslicher Initiator, besonders bevorzugt wenigstens ein wasserlöslicher Initiator, vor Schritt (c) zugegeben werden und wobei vorzugsweise mindestens ein vorzugsweise latentes Vernetzungsmittels, besonders bevorzugt wenigstens ein blockiertes Isocyanat, in die Mischung eingebunden wird, bevor das mindestens eine ethylenisch ungesättigte Monomer polymerisiert wird.

Vorzugsweise wird mindestens eine weitere Komponente vor Schritt (c) zugegeben, welche aus der Gruppe bestehend aus Vernetzungssmitteln, Koaleszenzmitteln, Verlaufsmitteln, Kettenübertägern und Mischungen davon ausgewählt ist.

Als Initiator kann jede übliche dem Fachmann bekannte hierfür geeignete Verbindung eingesetzt werden. Dem Fachmann sind solche Initiatoren bekannt, beispielsweise aus US 2004/043155 A1. Vorzugsweise wird als mindestens ein wasserlöslicher Initiator tert-Butylhydroperoxid eingesetzt. Vorzugsweise wird tert-Butylhydroperoxid in Kombination mit wenigstens einem Reduktionsmittel, insbesondere Natriumformaldehydsulfoxylat eingesetzt.

Als oberflächenaktive Verbindung kann jede übliche dem Fachmann bekannte hierfür geeignete Verbindung eingesetzt werden. Dem Fachmann sind solche oberflächenaktiven Verbindungen bekannt, beispielsweise aus US 2004/043155 A1. Vorzugsweise wird als wenigstens eine oberflächenaktive Verbindung ausgewählt aus der Gruppe bestehend aus amphoteren, nicht-ionischen und anionischen oberflächenaktiven Verbindungen sowie Mischungen davon ausgewählt, wobei anionische oberflächenaktiven Verbindungen besonders bevorzugt sind. Besonders bevorzugte anionische oberflächenaktive Verbindungen sind Natriumallyloxyhydroxypropylsulfonat und gegebenenfalls Propenyl-modifiziertes Nonylphenolethoxylatsulfat und gegebenenfalls Propenyl-modifiziertes Nonylphenolethoxylatsulfonat.

Gegebenenfalls umfasst die erfindungsgemäß eingesetzten Beschichtungszusammensetzung (I) neben dem wenigstens einen autophoretisch abscheidbaren Bindemittel wenigstens ein vorzugsweise autophoretisch abscheidbares Vernetzungsmittel auf, welches eine Vernetzungsreaktion mit den reaktiven funktionellen Gruppen des Bindemittels ermöglicht.

Alle dem Fachmann bekannten üblichen Vernetzungsmittel können eingesetzt werden wie beispielsweise Phenoplaste, Phenolharze, polyfunktionelle Mannich-Basen, Melaminharze, Benzoguanamin-Harze, Epoxide und/oder blockierte Polyisocyanate, insbesondere blockierte Polyisocyanate.

Ein besonders bevorzugtes Vernetzungsmittel ist ein blockiertes (Poly)Isocyanat, welches gegebenenfalls in Kombination mit einem Phenol-Harz eingesetzt werden kann. Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise bei ≥ 80°C, bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°, aber reagiert.

Bei der Herstellung der blockierten Polyisocyanate können beliebige für die Vernetzung geeignete organische Polyisocyanate verwendet werden. Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4-und/oder 2,6-Toluoldiisocyanat (TDI), Perhydro-2,4'-diphenylmethandiisocyanat, Perhydro-4,4'-diphenylmethandiisocyanat (H$_{12}$MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethyibenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschliesslich eines Polyetherpolyols oder eines Polyesterpolyols ableiten. Ganz besonders bevorzugt sind 4-Toluoldiisocyanat und/oder 2,6-Toluoldiisocyanat (TDI), bzw. Isomerengemische aus 2,4-Toluoldiisocyanat und 2,6-Toluoldiisocyanat und/oder Diphenylmethandiisocyanat (MDI).

Für die Blockierung der Polyisocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol oder aromatische Alkohole wie Phenol. Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Vorzugsweise liegt das relative Gewichtsverhältnis des wenigstens einen Bindemittels und des wenigstens einen Vernetzungsmittels in der erfindungsgemäß eingesetzten Beschichtungszusammensetzung (I) zueinander in einem Bereich von 4:1 bis 1,1:1, besonders bevorzugt in einem Bereich von 3:1 bis 1,1:1, ganz besonders bevorzugt in einem Bereich von 2,5:1 bis 1,1:1, insbesondere in einem Bereich von 2,1:1 bis 1,1:1, jeweils bezogen auf den Festkörper-Anteil des wenigstens einen Bindemittels und des wenigstens einen Vernetzungsmittel in der erfindungsgemäß eingesetzten Beschichtungszusammensetzung (I).

In einer anderen bevorzugten Ausführungsform liegt das relative Gewichtsverhältnis des wenigstens einen Bindemittels und des wenigstens einen Vernetzungsmittels in der erfindungsgemäß eingesetzten Beschichtungszusammensetzung (I) zueinander in einem Bereich von 4:1 bis 1,5:1, besonders bevorzugt in einem Bereich von 3:1 bis 1,5:1, ganz besonders bevorzugt in einem Bereich von 2,5:1 bis 1,5:1, insbesondere in einem Bereich von 2,1:1 bis 1,5:1, jeweils bezogen auf den Festkörper-Anteil des wenigstens einen Bindemittels und des wenigstens einen Vernetzungsmittel in der erfindungsgemäß eingesetzten Beschichtungszusammensetzung (I).

Die erfindungsgemäß eingesetzten Beschichtungszusammensetzung (I) kann zudem je nach erwünschter Anwendung wenigstens ein Pigment enthalten.

Vorzugsweise ist ein solches in der erfindungsgemäß eingesetzten Beschichtungszusammensetzung (I) enthaltenes Pigment ausgewählt aus der Gruppe bestehend aus organischen und anorganischen, farbgebenden und füllenden Pigmenten.

Beispiele für geeignete anorganische farbgebende Pigmente sind Weißpigmente wie Zinkoxid, Zinksulfid, Titandioxid, Antimonoxid oder Lithopone; Schwarzpigmente wie Ruß, Eisen-Mangan-Schwarz oder Spinellschwarz; Buntpigmente wie Kobaltgrün oder Ultramaringrün, Kobaltblau, Ultramarinblau oder Manganblau, Ultramarinviolett oder Kobalt- und Manganviolett, Eisenoxidrot, Molybdatrot oder Ultramarinrot; Eisenoxidbraun, Mischbraun, Spinell- und Korundphasen; oder Eisenoxidgelb, Nickeltitangelb, oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Der Pigment-Gehalt in den erfindungsgemäß eingesetzten Beschichtungszusammensetzungen (I) kann je nach Verwendungszweck und nach der Natur der Pigmente variieren. Vorzugsweise liegt das relative Gewichtsverhältnis von in der erfindungsgemäß eingesetzten Beschichtungszusammensetzung (I) enthaltenen Pigmenten und dem gesamten Festkörpergehalt der erfindungsgemäß eingesetzten Beschichtungszusammensetzung (I) in einem Bereich von 0,001:1 bis 0,5:1, besonders bevorzugt in einem Bereich von 0,005:1 bis 0,4:1, ganz besonders bevorzugt in einem Bereich von 0,01:1 bis 0,3:1.

Die erfindungsgemäß eingesetzte Beschichtungszusammensetzung (I) kann je nach erwünschter Anwendung ein oder mehrere üblicherweise eingesetzte Additive enthalten. Vorzugsweise sind diese Additive ausgewählt aus der Gruppe bestehend aus Benetzungsmitteln, Emulgatoren, Dispergiermitteln, oberflächen-aktiven Verbindungen wie Tensiden, Verlaufshilfsmitteln, Löslichkeitsvermittlern, Entschäumungsmitteln, Rheologiehilfsmitteln, Antioxidantien, Stabilisierungsmitteln, vorzugsweise Hitze-Stabilisatoren, Prozess-Stabilisatoren und UV- und/oder LichtStabilisatoren, Katalysatoren, Füllstoffen, Wachsen, Flexibilisierungsmitten, Weichmachern und Gemischen aus den vorstehend genannten Additiven. Der Additiv-Gehalt kann je nach Verwendungszweck sehr breit variieren. Vorzugsweise liegt der Gehalt, bezogen auf das Gesamtgewicht der erfindungsgemäß eingesetzten Beschichtungszusammensetzung (I), bei 0,1 bis 20,0 Gew.-%, bevorzugt bei 0,1 bis 15,0 Gew.-%, besonders bevorzugt bei 0,1 bis 10,0 Gew.-%, ganz besonders bevorzugt bei 0,1 bis 5,0 Gew.-% und insbesondere bei 0,1 bis 2,5 Gew.-%.

**Schritte (1a) und (1b)**

In einer bevorzugten Ausführungsform umfasst das erfindungsgemäße Verfahren ferner einen Schritt (1a), der vorzugsweise auf den Schritt (1) folgt, aber noch vor dem Schritt (2) durchgeführt wird, nämlich eine

(1a) Spülung des nach Schritt (1) erhältlichen mit der autophoretisch abgeschiedenen Beschichtungszusammensetzung (I) zumindest teilweise beschichteten Substrats mit Wasser und/oder mit Ultrafiltrat.

Der Begriff "Ultrafiltrat" bzw. "Ultrafiltration" insbesondere im Zusammenhang mit der Tauchlackierung ist dem Fachmann bekannt und beispielsweise definiert im Römpp Lexikon, Lacke und Druckfarben, Georg Thieme Verlag 1998.

Die Durchführung des Schritts (1a) ermöglicht die Rückführung überschüssiger nach Schritt (1) auf dem zumindest teilweise beschichteten Substrat befindlicher Bestandteile der Beschichtungszusammensetzung (I) in das Tauchlackbad.

Das erfindungsgemäße Verfahren kann ferner einen optionalen Schritt (1b), der vorzugsweise auf den Schritt (1) oder (1a), besonders bevorzugt auf den Schritt (1a) folgt, aber noch vor dem Schritt (2) durchgeführt wird, umfassen, nämlich ein

(1b) Kontaktieren des nach Schritt (1) oder Schritt (1a), vorzugsweise nach Schritt (1a), erhältlichen mit der autophoretisch abgeschiedenen Beschichtungszusammensetzung (I) zumindest teilweise beschichteten Substrats mit Wasser und/oder Ultrafiltrat, vorzugsweise über eine Dauer von 30 Sekunden bis zu einer Stunde, besonders bevorzugt über eine Dauer von 30 Sekunden bis zu 30 Minuten.

**Schritt (2)**

Schritt (2) des erfindungsgemäßen Verfahrens umfasst ein Kontaktieren des mit der autophoretisch abgeschiedenen Beschichtungszusammensetzung (I) zumindest teilweise beschichteten Substrats mit einer wässrigen Sol-Gel-Zusammensetzung (II) unter Filmbildung.

Die Durchführung von Schritt (2) innerhalb des erfindungsgemäßen Verfahrens erfolgt noch vor einer Aushärtung der autophoretisch abgeschiedenen Beschichtungszusammensetzung.

Schritt (2) sieht damit eine Nachbehandlung des mit der autophoretisch abgeschiedenen Beschichtungszusammensetzung (I) zumindest teilweise beschichteten Substrats mit einer wässrigen Sol-Gel-Zusammensetzung (II) vor.

Unter dem Begriff "Kontaktierung" bzw. "Kontaktieren" im Sinne der vorliegenden Erfindung wird vorzugsweise ein Eintauchen des mit der autophoretisch abgeschiedenen Beschichtungszusammensetzung (I) zumindest teilweise beschichteten Substrats in die in Schritt (2) eingesetzte wässrige Sol-Gel-Zusammensetzung (II), ein Besprühen oder Bespritzen des mit der autophoretisch abgeschiedenen Beschichtungszusammensetzung (I) zumindest teilweise beschichteten Substrats mit der in Schritt (2) eingesetzten wässrigen Sol-Gel-Zusammensetzung (II) oder ein Aufwalzen der in Schritt (2) eingesetzten wässrigen Sol-Gel-Zusammensetzung (II) auf des mit der autophoretisch abgeschiedenen Beschichtungszusammensetzung (I) zumindest teilweise beschichtete Substrat verstanden. Insbesondere wird unter dem Begriff "Kontaktierung" bzw. "Kontaktieren" im Sinne der vorliegenden Erfindung ein Eintauchen des mit der autophoretisch abgeschiedenen Beschichtungszusammensetzung (I) zumindest teilweise beschichteten Substrats in die in Schritt (2) eingesetzte wässrige Sol-Gel-Zusammensetzung (II) verstanden.

Schritt (2) des erfindungsgemäßen Verfahrens wird vorzugsweise nach Schritt (1) bzw. nach den Schritten (1), (1a) und (1b) durchgeführt. Falls das erfindungsgemäße Verfahren zusätzlich einen Schritt (1a) umfasst, welcher vorzugsweise auf den Schritt (1) folgt, aber noch vor dem Schritt (2) durchgeführt wird, so erfolgt in Schritt (2) eine Kontaktierung des nach Schritt (1) erhältlichen und nach Schritt (1a) mittels Spülung behandelten mit der autophoretisch abgeschiedenen Beschichtungszusammensetzung (I) zumindest teilweise beschichteten Substrats mit der wässrigen Sol-Gel-Zusammensetzung (II).

Die in Schritt (2) des erfindungsgemäßen Verfahrens eingesetzte wässrige Sol-Gel-Zusammensetzung weist vorzugsweise eine Temperatur im Bereich von 8°C bis 80°C, noch bevorzugter im Bereich von 10°C bis 75°C, besonders bevorzugt im Bereich von 12°C bis 70°C, ganz besonders bevorzugt im Bereich von 14°C bis 68°C, insbesondere im Bereich von 15°C bis 66°C oder im Bereich von 15°C bis 64°C, noch bevorzugter im Bereich von 17°C bis 62°C, am meisten bevorzugt im Bereich von 18°C bis 60°C auf. In einer anderen bevorzugten Ausführungsform weist die in Schritt (2) des erfindungsgemäßen Verfahrens eingesetzte wässrige Sol-Gel-Zusammensetzung eine Temperatur in einem Bereich von 20°C bis 80°C, noch bevorzugter im Bereich von 30°C bis 75°C, besonders bevorzugt im Bereich von 40°C bis 70°C, ganz besonders bevorzugt im Bereich von 50°C bis 65°C auf.

Die Dauer der Kontaktierung gemäß Schritt (2) des erfindungsgemäßen Verfahrens liegt vorzugsweise im Bereich von 5 bis 1000 Sekunden, besonders bevorzugt im Bereich von 10 bis 800 Sekunden, ganz besonders bevorzugt im Bereich von 10 bis 600 Sekunden, noch bevorzugter im Bereich von 10 bis 500 Sekunden.

In einer anderen bevorzugten Ausführungsform erfolgt die Kontaktierung gemäß Schritt (2) des erfindungsgemäßen Verfahrens über eine Dauer von wenigstens 5 Sekunden, vorzugsweise von wenigstens 10 Sekunden, besonders bevorzugt von wenigstens 15 Sekunden, insbesondere von wenigstens 20 Sekunden, am meisten bevorzugt von wenigstens 25 Sekunden.

Die in Schritt (2) des erfindungsgemäßen Verfahrens eingesetzte Zusammensetzung ist eine wässrige Sol-Gel-Zusammensetzung (II).

Unter dem Begriff "wässrig" im Zusammenhang mit der in Schritt (2) des erfindungsgemäßen Verfahrens eingesetzten wässrigen Zusammensetzung bzw. wässrigen Sol-Gel-Zusammensetzung (II) wird vorzugsweise eine flüssige Zusammensetzung verstanden, die - als flüssiges Verdünnungsmittel, d.h. als flüssiges Lösemittel und/oder Dispergiermittel, insbesondere als Lösemittel - Wasser als Hauptkomponente enthält. Gegebenenfalls kann die erfindungsgemäß eingesetzte wässrige Zusammensetzung jedoch zusätzlich einen Anteil an wenigstens einem organischen Lösemittel, vorzugsweise wenigstens einem mit Wasser mischbaren organischen Lösemittel enthalten. Insbesondere bevorzugt sind solche vorzugsweise mit Wasser mischbaren organischen Lösemittel ausgewählt aus der Gruppe bestehend aus Alkoholen wie Methanol, Ethanol, 1-Propanol und 2-Propanol, organische Carbonsäuren wie Ameisensäure, Essigsäure und Propionsäure, Ketonen wie Aceton und Glykolen wie Ethylenglykol oder Propylenglykol, sowie Gemischen davon. Vorzugsweise beträgt der Anteil dieser vorzugsweise mit Wasser mischbaren organischen Lösemittel höchstens 20,0 Gew.-%, besonders bevorzugt höchstens 15,0 Gew.-%, ganz besonders bevorzugt höchstens 10,0 Gew.-%, insbesondere höchstens 5,0 Gew.-%, noch bevorzugter höchstens 2,5 Gew.-%, am meisten bevorzugt höchstens 1,0 Gew.-%, jeweils bezogen auf den Gesamtanteil der in Schritt (2) des erfindungsgemäßen Verfahrens eingesetzten wässrigen Zusammensetzung enthaltenen flüssigen Verdünnungsmitteln, d.h. flüssigen Lösemitteln und/oder Dispergiermitteln, insbesondere Lösemitteln.

Vorzugsweise liegt die in Schritt (2) des erfindungsgemäßen Verfahrens eingesetzte wässrige Zusammensetzung in Form einer wässrigen Lösung oder wässrigen Dispersion, insbesondere in Form einer wässrigen Lösung vor. Besonders bevorzugt liegt erfindungsgemäß eingesetzte wässrige Sol-Gel-Zusammensetzung (II) in Form einer wässrigen kolloiden Lösung oder wässrigen Dispersion, insbesondere in Form einer wässrigen kolloiden Lösung vor.

Die in Schritt (2) des erfindungsgemäßen Verfahrens eingesetzte wässrige Sol-Gel-Zusammensetzung (II) weist vorzugsweise einen pH-Wert im Bereich von 2,0 bis 10,0, besonders bevorzugt von im Bereich von 2,5 bis 8,5 oder im Bereich von 2,5 bis 8,0, ganz besonders bevorzugt von im Bereich von 3,0 bis 7,0 oder im Bereich von 3,0 bis 6,5 oder im Bereich von 3,0 bis 6,0, insbesondere im Bereich von 3,5 bis 6,0 oder im Bereich von 3,5 bis 5,5, insbesondere bevorzugt im Bereich von 3,7 bis 5,5, am meisten bevorzugt im Bereich von 3,9 bis 5,5 oder 4,0 bis 5,5 auf. Methoden zur Einstellung von pH-Werten in wässrigen Zusammensetzungen sind dem Fachmann bekannt. Vorzugsweise erfolgt die Einstellung des erwünschten pH-Werts der in Schritt (2) des erfindungsgemäßen Verfahrens eingesetzten wässrigen Zusammensetzung durch Zugabe wenigstens einer Säure, besonders bevorzugt wenigstens einer anorganischen und/oder wenigstens einer organischen Säure. Geeignete anorganische Säuren sind beispielsweise Salzsäure, Schwefelsäure, Phosphorsäure und/oder Salpetersäure. Eine geeignete organische Säure ist beispielsweise Propionsäure, Milchsäure, Essigsäure und/oder Ameisensäure. Ganz besonders bevorzugt erfolgt die Einstellung des erwünschten pH-Werts durch Zugabe von Ameisensäure oder Phosphorsäure.

**Wässrige Sol-Gel-Zusammensetzung (II)**

Die in Schritt (2) des erfindungsgemäßen Verfahrens eingesetzte wässrige Zusammensetzung ist eine wässrige Sol-Gel-Zusammensetzung (II).

Dem Fachmann sind die Begriffe "Sol-Gel-Zusammensetzung", "Sol-Gel" sowie die Herstellung von Sol-Gel-Zusammensetzungen und Sol-Gelen bekannt, beispielsweise aus D. Wang et al., Progress in Organic Coatings 2009, 64, 327-338 oder S. Zheng et al., J. Sol-Gel. Sci. Technol. 2010, 54, 174-187.

Unter einer wässrigen "Sol-Gel-Zusammensetzung" im Sinne der vorliegenden Erfindung wird eine wässrige Zusammensetzung verstanden, zu deren Herstellung wenigstens eine Ausgangsverbindung, welche wenigstens ein Metallatom und/oder Halbmetallatom wie beispielsweise $M^1$ und/oder $M^2$ und wenigstens zwei hydrolysierbare Gruppen wie beispielsweise zwei hydrolysierbare Gruppen $X^1$ aufweist, und welche ferner wenigstens einen nicht hydrolysierbaren organischen Rest wie beispielsweise $R^1$ aufweist, mit Wasser unter Hydrolyse und Kondensation umgesetzt wird. Die wenigstens zwei hydrolysierbaren Gruppen sind dabei vorzugsweise jeweils direkt an das in der wenigstens einen Ausgangsverbindung enthaltene wenigstens eine Metallatom und/oder wenigstens eine Halbmetallatom jeweils mittels einer Einfachbindung gebunden. Aufgrund der Gegenwart des nicht hydrolysierbaren organischen Restes wie beispielsweise $R^1$ kann eine solche erfindungsgemäß eingesetzte Sol-Gel-Zusammensetzung auch als "Sol-Gel-Hybrid-Zusammensetzung" bezeichnet werden.

Bei dieser Umsetzung werden in einem ersten Hydrolyse-Schritt die wenigstens zwei hydrolysierbaren Gruppen abgespalten und innerhalb der wenigstens einen Ausgangsverbindung durch OH-Gruppen ersetzt, wodurch die Ausbildung von Metall-OH-Bindungen bzw. Halbmetall-OH-Bindungen innerhalb der im ersten Schritt eingesetzten wenigstens einen Ausgangsverbindung resultiert (Hydrolyse-Schritt). In einem zweiten Schritt erfolgt eine Kondensation zweier im ersten Schritt gebildeter Moleküle beispielsweise durch Reaktion jeweils einer der so gebildeten Metall-OH-Bindungen des einen Moleküls mit einer der so gebildeten Metall-OH-Bindungen des zweiten Moleküls unter Wasserabspaltung (Kondensations-Schritt). Das so gebildete Molekül, welches beispielsweise wenigstens eine Metall-O-Metall-Gruppe (oder Metall-O-Halbmetall-Gruppe oder Halbmetall-O-Halbmetall-Gruppe) und zudem insgesamt wenigstens zwei hydrolysierbare Gruppen aufweist, kann dann erneut hydrolysiert werden und analog mit weiteren nach dem ersten Hydrolyse-Schritt erhältlichen Verbindungen reagieren und die dann analog gebildete resultierende Verbindung entsprechend weiterreagieren, so dass es zur Ausbildung von Ketten und insbesondere von zwei- oder dreidimensionalen Strukturen kommt. Dieses wenigstens zweischrittige Verfahren umfassend wenigstens den ersten Hydrolyse-Schritt und wenigstens den zweiten Kondensations-Schritt wird als Sol-Gel-Verfahren oder als Sol-Gel-Prozess bezeichnet. Je nach Vernetzungsgrad durch die Kondensation entsteht so ein Sol bzw. ein Gel, wodurch die wässrige Zusammensetzung als Sol-Gel-Zusammensetzung bezeichnet wird. Dabei wird vorzugsweise unter einer reinen Sol-Zusammensetzung eine Zusammensetzung verstanden, in der die Reaktionsprodukte kolloidal gelöst vorliegen. Eine Sol-Zusammensetzung zeichnet sich durch eine niedrigere Viskosität aus als eine Gel-Zusammensetzung. Vorzugsweise wird unter einer reinen Gel-Zusammensetzung eine Zusammensetzung verstanden, die sich durch eine hohe Viskosität auszeichnet und die eine Gel-Struktur aufweist. Der Übergang von einer Sol- zu einer Gel-Zusammensetzung ist vorzugsweise durch einen sprunghaften Anstieg der Viskosität gekennzeichnet. Die erfindungsgemäß eingesetzte Sol-Gel-Zusammensetzung ist vorzugsweise weder eine reine Sol-Zusammensetzung noch eine reine Gel-Zusammensetzung, sondern eine Sol-Gel-Zusammensetzung.

Vorzugsweise wird die zur Herstellung der erfindungsgemäß eingesetzten wässrigen Sol-Gel-Zusammensetzung (II) benötigte wenigstens eine Ausgangsverbindung dabei durch Einrühren in Wasser oder Zugabe von Wasser zu der wenigstens einen Ausgangsverbindung hergestellt. Dies erfolgt vorzugsweise bei einer Temperatur, die im Bereich von 15°C bis 40°C oder im Bereich von 15°C bis 37°C, noch bevorzugter im Bereich von 17°C bis 35°C, am meisten bevorzugt im Bereich von 18°C bis 30°C oder im Bereich von 18°C bis 25°C, liegt. Um die Herstellung der erfindungsgemäß eingesetzten wässrigen Sol-Gel-Zusammensetzung (II) zu beschleunigen, kann die Herstellung gegebenenfalls auch bei höheren Temperaturen als 40°C durchgeführt werden, beispielsweise bei einer Temperatur von bis zu 80°C, d.h. beispielsweise in einem Bereich von 15°C bis 80°C.

Vorzugsweise wird die so erhaltene wässrige Sol-Gel-Zusammensetzung (II) - bevor sie in Schritt (2) des erfindungsgemäßen Verfahrens eingesetzt wird - über eine Dauer im Bereich von 2 Stunden bis 28 Tagen, besonders bevorzugt über eine Dauer im Bereich von 3 Stunden bis 26 Tagen, ganz besonders bevorzugt über eine Dauer im Bereich von 5 Stunden bis 22 Tagen oder über eine Dauer im Bereich von 6 Stunden bis 20 Tagen, noch bevorzugter über eine Dauer im Bereich von 7 Stunden bis 18 Tagen, insbesondere über eine Dauer im Bereich von 8 Stunden bis 16 Tagen, bei einer Temperatur von 18-25 °C ruhen gelassen, um eine ausreichende Hydrolyse und Kondensation zu gewährleisten. In einer anderen bevorzugten Ausführungsform wird die so erhaltene wässrige Sol-Gel-Zusammensetzung (II) - bevor sie in Schritt (2) des erfindungsgemäßen Verfahrens eingesetzt wird - über eine Dauer von wenigstens 4 Stunden, vorzugsweise von wenigstens 6 Stunden oder von wenigstens 8 Stunden oder von wenigstens 12 Stunden oder von wenigstens 16 Stunden oder von wenigstens 20 Stunden oder von wenigstens 24 Stunden, besonders bevorzugt über eine Dauer von wenigstens 2 Tagen oder von wenigstens 3 Tagen oder von wenigstens 4 Tagen oder von wenigstens 6 Tagen oder von wenigstens 8 Tagen oder von wenigstens 10 Tagen oder von wenigstens 12 Tagen oder von wenigstens 14 Tagen bei einer Temperatur von 18-25 °C ruhen gelassen, um eine ausreichende Hydrolyse und Kondensation zu gewährleisten.

Die zur Herstellung der wässrigen Sol-Gel-Zusammensetzung (II) eingesetzte wenigstens eine Ausgangsverbindung, welche wenigstens ein Metallatom und/oder Halbmetallatom wie beispielsweise $M^1$ und/oder $M^2$ und wenigstens zwei hydrolysierbare Gruppen wie beispielsweise wenigstens zwei hydrolysierbare Gruppen $X^1$ aufweist, weist zudem wenigstens einen nicht hydrolysierbaren organischen Rest auf. Dieser nicht hydrolysierbare organische Rest wie beispielsweise ein entsprechender Rest $R^1$ ist vorzugsweise direkt an das in der wenigstens einen Ausgangsverbindung enthaltene Metallatom und/oder Halbmetallatom wie beispielsweise $M^1$ und/oder $M^2$ mittels einer Einfachbindung gebunden. In diesem Fall kommt es bei dem wenigstens zweischrittigen Verfahren umfassend wenigstens den ersten Hydrolyse-Schritt und wenigstens den zweiten Kondensations-Schritt zur Ausbildung von Ketten und insbesondere von zwei- oder dreidimensionalen Strukturen, welche sowohl anorganische als auch organische Gruppen aufweisen. In diesem Fall kann die so erhaltene Sol-Gel-Zusammensetzung als anorganisch-organische Sol-Gel-Hybrid-Zusammensetzung bezeichnet werden.

Gegebenenfalls enthält der wenigstens eine nicht hydrolysierbare organische Rest wie beispielsweise der Rest $R^1$ wenigstens eine reaktive funktionelle Gruppe, welche vorzugsweise ausgewählt ist aus der Gruppe bestehend aus primären Amino-Gruppen, sekundären Amino-Gruppen, Epoxid-Gruppen, Thiol-Gruppen, Isocyanat-Gruppen, phosphorhaltige Gruppen wie Phosphonat-Gruppen, Silan-Gruppen, die gegebenenfalls wiederum wenigstens einen nicht hydrolysierbaren organischen Rest aufweisen können, welcher gegebenenfalls wenigstens eine reaktive funktionelle Gruppe aufweist, und Gruppen, die eine ethylenisch ungesättige Doppelbindung aufweisen wie Vinyl-Gruppen oder (Meth)acryl-Gruppen, ganz besonders bevorzugt ausgewählt ist aus der Gruppe bestehend aus primären Amino-Gruppen, sekundären Amino-Gruppen, Epoxid-Gruppen, Thiol-Gruppen, und Gruppen, die eine ethylenisch ungesättige Doppelbindung aufweisen wie Vinyl-Gruppen oder (Meth)acryl-Gruppen, insbesondere ausgewählt ist aus der Gruppe bestehend aus primären Amino-Gruppen und Epoxid-Gruppen. Die Epoxid-Gruppe kann dabei durch Umsetzung mit Wasser in zwei Hydroxyl-Gruppen überführt werden, welche dann als reaktive funktionelle Gruppen fungieren können.

Der Ausdruck "(Meth)acryl" umfasst im Sinne der vorliegenden Erfindung jeweils die Bedeutungen "Methacryl" und/oder "Acryl".

Unter dem Ausdruck "nicht hydrolysierbarer organischer Rest, welcher wenigstens eine reaktive funktionelle Gruppe aufweist" wird im Zusammenhang mit einem nicht hydrolysierbaren organischen Rest wie beispielsweise dem Rest $R^1$ im Sinne der vorliegenden Erfindung vorzugsweise verstanden, dass der nicht hydrolysierbare organische Rest wenigstens eine solche funktionelle Gruppe aufweist, die eine Reaktivität gegenüber den gegebenenfalls im Bindemittel der erfindungsgemäß eingesetzten Beschichtungszusammensetzung (I) und/oder den reaktiven funktionellen Gruppen des gegebenenfalls in der erfindungsgemäß eingesetzten Beschichtungszusammensetzung (I) vorhandenen Vernetzungsmittel (C) aufweist. Durch eine Reaktion entsprechender funktioneller Gruppen kann es dabei zur Ausbildung von kovalenten Bindungen kommen.

Der wenigstens eine nicht hydrolysierbare organische Rest wie beispielsweise der Rest $R^1$ muss jedoch nicht zwingend wenigstens eine reaktive funktionelle Gruppe aufweisen, sondern kann auch ein nicht hydrolysierbarer organischer Rest sein, der keine reaktiven funktionellen Gruppe aufweist.

Unter dem Ausdruck "nicht hydrolysierbarer organischer Rest, welcher keine reaktive funktionelle Gruppe aufweist" wird im Zusammenhang mit einem nicht hydrolysierbaren organischen Rest wie beispielsweise dem Rest $R^1$ im Sinne der vorliegenden Erfindung vorzugsweise verstanden, dass der nicht hydrolysierbare organische Rest keine solche funktionelle Gruppe aufweist, die eine Reaktivität gegenüber den gegebenenfalls im Bindemittel der erfindungsgemäß eingesetzten Beschichtungszusammensetzung (I) und/oder den reaktiven funktionellen Gruppen des gegebenenfalls in der erfindungsgemäß eingesetzten Beschichtungszusammensetzung (I) vorhandenen Vernetzungsmittel (C) aufweist.

Eine so erhaltene wässrige Sol-Gel-Zusammensetzung (II), in der die wenigstens eine Ausgangsverbindung, welche neben den wenigstens zwei hydrolysierbaren Gruppen wie beispielsweise wenigstens zwei hydrolysierbaren Gruppen $X^1$ wenigstens einen nicht hydrolysierbaren organischen Rest wie beispielsweise $R^1$ aufweist, zeichnet sich insbesondere dadurch aus, dass bei ihrer Herstellung kein kolloidales Hydroxid oder kolloidales Oxid, welches beispielsweise in EP 1 510 558 A1 oder WO 03/090938 A1 offenbart ist, sondern eine anorganisch-organische Hybrid-Sol-Gel-Zusammensetzung entsteht, welche sich besser auf die in Schritt (1) des erfindungsgemäßen Verfahrens autophoretisch abgeschiedene Beschichtungszusammensetzung (I) aufbringen lässt als ein kolloidales Hydroxid oder kolloidales Oxid gemäß EP 1 510 558 A1 oder WO 03/090938 A1.

Die wässrige Sol-Gel-Zusammensetzung (II) weist wenigstens einen und gegebenenfalls wenigstens einen weiteren vom ersten unterschiedlichen nicht hydrolysierbaren organischen Rest auf, wie beispielsweise wenigstens einen nicht hydrolysierbaren organischen Rest $R^1$, der ein $C_{1-10}$-aliphatischer Rest ist, der wenigstens eine Hydroxyl-Gruppe als wenigstens eine reaktive funktionelle Gruppe aufweist und der gegebenenfalls vorhandene weitere nicht hydrolysierbare organische Rest ein $C_{1-10}$-aliphatischer Rest ist, der wenigstens eine primäre Amino-Gruppe oder wenigstens eine sekundäre Amino-Gruppe als wenigstens eine reaktive funktionelle Gruppe aufweist. Zur Herstellung einer solchen erfindungsgemäß eingesetzten wässrigen Sol-Gel-Zusammensetzung (II) eignet sich wenigstens eine und gegebenenfalls zwei voneinander verschiedene Ausgangsverbindungen, die mit Wasser einer Hydrolyse und Kondensation unterworfen werden, wobei die wenigstens eine Ausgangsverbindung einen $C_{1-10}$-aliphatischen Rest als einen nicht hydrolysierbaren organischen Rest wie beispielsweise $R^1$ aufweist, der wenigstens eine Epoxid-Gruppe als eine reaktive funktionelle Gruppe aufweist und der die andere gegebenenfalls vorhandene Ausgangsverbindung wenigstens eine primäre Amino-Gruppe oder wenigstens eine sekundäre Amino-Gruppe als reaktive funktionelle Gruppe aufweist. Die Epoxid-Gruppe des nicht hydrolysierbaren organischen Restes wird dabei durch Umsetzung mit Wasser in einen entsprechenden organischen Rest mit einer $\alpha,\beta$-Dihydroxy-Gruppe überführt.

In einer bevorzugten Ausführungsform ist die wässrige Sol-Gel-Zusammensetzung (II) erhältlich durch Umsetzung

von wenigstens zwei Ausgangsverbindungen, welche jeweils unabhängig voneinander wenigstens ein Metallatom und/oder Halbmetallatom wie beispielsweise $M^1$ und zudem jeweils unabhängig voneinander wenigstens zwei hydrolysierbare Gruppen wie beispielsweise wenigstens zwei hydrolysierbare Gruppen $X^1$ aufweisen,

wobei die wenigstens zwei hydrolysierbaren Gruppen vorzugsweise jeweils direkt an das in den wenigstens zwei Ausgangsverbindungen jeweils enthaltene Metallatom und/oder Halbmetallatom mittels Einfachbindungen gebunden sind,

mit Wasser,

wobei wenigstens eine der wenigstens zwei Ausgangsverbindungen neben den wenigstens zwei hydrolysierbaren Gruppen zudem wenigstens eine nicht hydrolysierbare Gruppe, besonders bevorzugt wenigstens einen nicht hydrolysierbaren organischen Rest wie beispielsweise dem Rest $R^1$ aufweist, wobei diese nicht hydrolysierbare Gruppe insbesondere direkt an das in der wenigstens einen Ausgangsverbindung enthaltene Metallatom und/oder Halbmetallatom wie $M^1$ mittels einer Einfachbindung gebunden ist und dabei gegebenenfalls wenigstens eine reaktive funktionelle Gruppe, welche vorzugsweise ausgewählt ist aus der Gruppe bestehend aus primären Amino-Gruppen, sekundären Amino-Gruppen, Epoxid-Gruppen, Thiol-Gruppen, Isocyanat-Gruppen, phosphorhaltige Gruppen wie Phosphonat-Gruppen, Silan-Gruppen, die gegebenenfalls wiederum wenigstens einen nicht hydrolysierbaren organischen Rest aufweisen können, welcher gegebenenfalls wenigstens eine reaktive funktionelle Gruppe aufweist, und Gruppen, die eine ethylenisch ungesättige Doppelbindung aufweisen wie Vinyl-Gruppen oder (Meth)acryl-Gruppen, ganz besonders bevorzugt ausgewählt ist aus der Gruppe bestehend aus primären Amino-Gruppen, sekundären Amino-Gruppen, Epoxid-Gruppen, Thiol-Gruppen, und Gruppen, die eine ethylenisch ungesättige Doppelbindung aufweisen wie Vinyl-Gruppen oder (Meth)acryl-Gruppen, insbesondere ausgewählt ist aus der Gruppe bestehend aus primären Amino-Gruppen und Epoxid-Gruppen, enthält.

Vorzugsweise ist die in Schritt (2) des erfindungsgemäßen Verfahrens eingesetzte wässrige Sol-Gel-Zusammensetzung (II) erhältlich durch Umsetzung von wenigstens einer Verbindung

$$(A1) \qquad (M^1)^x(X^1)_a(R^1),$$

und/oder

$$(A2) \qquad (M^2)^y(X^2)_b(R^2)(R^3),$$

vorzugsweise von wenigstens einer Verbindung (A1), mit Wasser, worin

$M^1$ und $M^2$ jeweils unabhängig voneinander für ein Metallatom oder ein Halbmetallatom stehen, wobei vorzugsweise wenigstens eine der Variablen $M^1$ und $M^2$, besonders bevorzugt beide der Variablen $M^1$ und $M^2$, für Si steht/stehen,

$X^1$ und $X^2$ jeweils unabhängig voneinander für eine hydrolysierbare Gruppe stehen,

$x$ für die Wertigkeit des Metallatoms oder Halbmetallatoms $M^1$ steht, vorzugsweise jeweils für +3 oder +4 steht,

$y$ für die Wertigkeit des Metallatoms oder Halbmetallatoms $M^2$ steht, vorzugsweise jeweils für +3 oder

+4 steht,

R$^1$ für X$^1$, einen nicht hydrolysierbaren organischen Rest, für $(T)(M^1)^x(X^1)_c$ oder für $(U)[(M^1)^x(X^1)_c]_2$, steht, vorzugsweise für einen nicht hydrolysierbaren organischen Rest, steht,

R$^2$ für einen nicht hydrolysierbaren organischen Rest steht,

R$^3$ für einen nicht hydrolysierbaren organischen Rest, für $(T)(M^1)^x(X^1)_c$, für $(U)[(M^1)^x(X^1)_c]_2$, für $(V)(M^2)^y(X^2)_d(R^2)$ oder für $(W)[(M^2)^y(X^2)_d(R^2)]_2$ steht, vorzugsweise für einen nicht hydrolysierbaren organischen Rest, steht,

a für x steht, wenn R$^1$ für X$^1$ steht oder

a für x-1 steht, wenn R$^1$ für einen nicht hydrolysierbaren organischen Rest, für $(T)(M^1)^x(X^1)_c$ oder für $(U)[(M^1)^x(X^1)_c]_2$ steht, jeweils unter der Voraussetzung, dass a mindestens für 2 steht,

b für y-2 steht, unter der Voraussetzung, dass b mindestens für 2 steht,

T, U, V und W jeweils unabhängig voneinander für einen Rest stehen, der 1 bis 30 Kohlenstoffatome aufweist und gegebenenfalls bis zu 10 Heteroatome und Heteroatomgruppen ausgewählt aus der Gruppe bestehend aus O, S und N aufweisen kann,

c für x-1 steht, vorzugsweise unter der Voraussetzung, dass c mindestens für 2 steht, und

d für y-2 steht, vorzugsweise unter der Voraussetzung, dass d mindestens für 2 steht,

mit Wasser.

Dem Fachmann ist der Begriff einer "hydrolysierbaren Gruppe" bekannt. Jede übliche dem Fachmann bekannte hydrolysierbare Gruppe wie beispielsweise X$^1$ oder X$^2$ kann als Bestandteil der wenigstens einen zur Herstellung der wässrigen Sol-Gel-Zusammensetzung eingesetzten Ausgangsverbindung, insbesondere der wenigstens einen Komponente (A1) und/oder (A2), dienen.

Unter einer "hydrolysierbaren Gruppe" wie beispielsweise der Gruppen X$^1$ und X$^2$ wird im Sinne der vorliegenden Erfindung vorzugsweise eine hydrolysierbare Gruppe ausgewählt aus der Gruppe bestehend aus Halogeniden, vorzugsweise Flуroriden, Chloriden, Bromiden und Iodiden, insbesondere Fluoriden und Chloriden, Alkoxy-Gruppen, vorzugsweise Alkoxy-Gruppen O-R$^a$, worin R$^a$ für einen gegebenenfalls mit einer $C_{1-6}$-Alkoxy-Gruppe substituierten $C_{1-16}$-aliphatischen Rest, vorzugsweise $C_{1-10}$-aliphatischen Rest, besonders bevorzugt $C_{1-6}$-aliphatischen Rest, insbesondere $C_{1-6}$-Alkyl-Rest wie für Methyl, Ethyl, n-Propyl, iso-Propyl, n-Butyl, iso-Butyl, oder tert-Butyl, steht, Carboxylat-Gruppen, vorzugsweise $C_{1-6}$-Carboxylat-Gruppen, insbesondere Carboxylat-Gruppen ausgewählt aus der Gruppe bestehend aus Acetat und besonders bevorzugt Diketonat-Gruppen ausgewählt aus der Gruppe bestehend aus Acetylacetonat, Acetonylacetonat und Diacetylat.

Besonders bevorzugt wird unter einer "hydrolysierbaren Gruppe" wie beispielsweise der der Gruppen X$^1$ und X$^2$ eine Alkoxy-Gruppe, vorzugsweise eine Alkoxy-Gruppe O-R$^a$, worin R$^a$ für einen gegebenenfalls mit einer $C_{1-6}$-Alkoxy-Gruppe substituierten $C_{1-16}$-aliphatischen Rest, vorzugsweise $C_{1-10}$-aliphatischen Rest, besonders bevorzugt $C_{1-6}$-aliphatischen Rest, insbesondere $C_{1-6}$-Alkyl-Rest wie für Methyl, Ethyl, n-Propyl, iso-Propyl, n-Butyl, iso-Butyl, oder tert.-Butyl, steht, verstanden.

Dem Fachmann ist der Begriff "Wertigkeit" im Zusammenhang mit Metallatomen oder Halbmetallatomen wie M$^1$ und M$^2$ bekannt. Vorzugsweise bezeichnet die Wertigkeit im Sinne der vorliegenden Erfindung die Oxidationszahl des jeweiligen Metallatoms oder Halbmetallatoms wie beispielsweise M$^1$ und M$^2$. Bevorzugt sind Wertigkeiten für x und y - jeweils unabhängig voneinander - von +2, +3 und +4, insbesondere von +3 und +4.

Geeignete Metallatome wie beispielsweise M$^1$ und M$^2$ sind alle üblichen Metallatome einschließlich Übergangsmetallatomen, die Bestandteil der wenigstens einen Ausgangsverbindung, insbesondere (A1) und/oder (A2), wie beispielsweise Al, Ti, Zr, und Fe, vorzugsweise Ti und Zr. Geeignete Halbmetallatome wie beispielsweise M$^1$ und M$^2$ sind alle üblichen Halbmetallatome, die Bestandteil der wenigstens einen Ausgangsverbindung, insbesondere (A1) und/oder (A2), sein können, wie beispielsweise B und Si, vorzugsweise Si.

Vorzugsweise sind die Metallatome und Halbmetallatome wie beispielsweise M$^1$ und M$^2$ jeweils unabhängig voneinander ausgewählt aus der Gruppe bestehend aus Al, Ti, Zr, Fe, B und Si, besonders bevorzugt ausgewählt aus der Gruppe bestehend aus Ti, Zr und Si, ganz besonders bevorzugt ausgewählt aus der Gruppe bestehend aus Zr und Si. Insbesondere bedeuten die Metallatome und Halbmetallatome wie beispielsweise M$^1$ und M$^2$ jeweils Si.

Insbesondere ist $M^1$ ausgewählt aus der Gruppe bestehend aus Al, Ti, Zr, Fe, B und Si, besonders bevorzugt ausgewählt aus der Gruppe bestehend aus Ti, Zr und Si, ganz besonders bevorzugt ausgewählt aus der Gruppe bestehend aus Zr und Si, insbesondere bedeutet $M^1$ Si. Vorzugsweise bedeutet $M^2$ Si.

Die Wertigkeiten x, y, und z der Metallatome und Halbmetallatome wie beispielsweise $M^1$ und $M^2$ sind dabei vorzugsweise so gewählt, dass die Metallatome und Halbmetallatome wie beispielsweise $M^1$ und $M^2$ jeweils unabhängig voneinander ausgewählt sind aus der Gruppe bestehend aus $Al^{3+}$, $Ti^{4+}$, $Zr^{4+}$, $Fe^{3+}$, $Fe^{4+}$, $B^{3+}$ und $Si^{4+}$, besonders bevorzugt aus der Gruppe bestehend aus $Al^{3+}$, $Ti^{4+}$, $Zr^{4+}$ und $Si^{4+}$, ganz besonders bevorzugt aus der Gruppe bestehend aus $Ti^{4+}$, $Zr^{4+}$ und $Si^{4+}$, insbesondere jeweils für $Si^{4+}$ stehen.

Dem Fachmann ist der Begriff eines "nicht hydrolysierbaren organischen Restes" bekannt. Jeder übliche dem Fachmann bekannte organische Rest, der nicht hydrolysierbar ist, kann als Bestandteil der wenigstens einen zur Herstellung der wässrigen Sol-Gel-Zusammensetzung (II) eingesetzten Ausgangsverbindung, insbesondere der wenigstens einen Komponente (A1) und/oder (A2) dienen.

Unter einem "nicht hydrolysierbaren organischen Rest" wird, beispielsweise im Zusammenhang mit den Resten $R^1$, $R^2$ und $R^3$- jeweils unabhängig voneinander - vorzugsweise ein nicht hydrolysierbarer organischer Rest ausgewählt aus der Gruppe bestehend aus $C_1$-$C_{10}$-aliphatischen Resten, $C_1$-$C_{10}$-heteroaliphatischen Resten, $C_3$-$C_{10}$-cycloaliphatischen Resten, 3-10- gliedrigen heterocycloaliphatischen Resten, 5-12 gliedrigen Aryl- oder Heteroaryl-Resten, über einen $C_{1-6}$-aliphatischen Rest gebundene $C_3$-$C_{10}$-cycloaliphatische Reste, über einen $C_{1-6}$-aliphatischen Rest gebundene 3-10-gliedrige heterocycloaliphatische Reste, über einen $C_{1-6}$-aliphatischen Rest gebundene 5-12 gliedrige Aryl- oder Heteroaryl-Reste, verstanden, wobei jeder diese Reste gegebenenfalls wenigstens eine reaktive funktionelle Gruppe enthalten kann, sofern die Bindung des nicht hydrolysierbaren organischen Restes an das Metallatom oder Halbmetallatomen wie beispielsweise $M^1$ und/oder $M^2$, insbesondere wenn $M^1$ und/oder $M^2$ jeweils für Si stehen, unter dem Fachmann bekannten üblichen Reaktionsbedingungen nicht hydrolytisch gespalten werden kann.

Der Ausdruck "$C_1$-$C_{10}$-aliphatischer Rest" umfasst im Sinne dieser Erfindung vorzugsweise acyclische gesättigte oder ungesättigte, vorzugsweise gesättigte, aliphatische Kohlenwasserstoffreste, d.h. $C_{1-10}$-aliphatische Reste, die jeweils verzweigt oder unverzweigt sowie unsubstituiert oder ein- oder mehrfach substituiert sein können, mit 1 bis 10 Kohlenstoffatomen, d.h. $C_{1-10}$-Alkanyle, $C_{2-10}$-Alkenyle und $C_{2-10}$-Alkinyle. Dabei weisen Alkenyle mindestens eine C-C-Doppelbindung und Alkinyle mindestens eine C-C-Dreifachbindung auf. Bevorzugt ist ein $C_1$-$C_{10}$-aliphatischer Rest aus der Gruppe ausgewählt, die Methyl, Ethyl, n-Propyl, 2-Propyl, n-Butyl, iso-Butyl, sec.-Butyl, tert.-Butyl, n-Pentyl, iso-Pentyl, neo-Pentyl, n-Hexyl, n-Heptyl, n-Octyl, n-Nonyl, und n-Decyl, umfasst.

Der Ausdruck "$C_1$-$C_{10}$-heteroaliphatischer Rest" umfasst im Sinne dieser Erfindung vorzugsweise $C_1$-$C_{10}$-aliphatische Reste, in denen wenigstens ein, gegebenenfalls auch 2 oder 3 Kohlenstoffatome durch ein Heteroatom wie N, O oder S oder eine Heteroatomgruppe wie NH, N($C_{1-10}$-aliphatischer Rest) oder N($C_{1-10}$-aliphatischer Rest)$_2$ ersetzt ist/sind.

Der Ausdruck "$C_{3-10}$-cyloaliphatischer Rest" umfasst im Sinne dieser Erfindung vorzugsweise cyclische aliphatische (cycloaliphatische) Kohlenwasserstoffe mit 3, 4, 5, 6, 7, 8, 9 oder 10 Kohlenstoffatomen, wobei die Kohlenwasserstoffe gesättigt oder ungesättigt (aber nicht aromatisch), unsubstituiert oder ein- oder mehrfach substituiert sein können. Die Bindung des $C_{3-10}$-cyloaliphatischen Restes an die jeweilige übergeordnete allgemeine Struktur kann über jedes beliebige und mögliche Ringglied des $C_{3-10}$-cyloaliphatischen Restes erfolgen, erfolgt jedoch vorzugsweise über ein Kohlenstoffatom. Die $C_{3-10}$-cyloaliphatischen Reste können weiterhin einfach oder mehrfach verbrückt sein wie bspw. im Fall von Adamantyl, Bicyclo[2.2.1]heptyl oder Bicyclo[2.2.2]octyl. Bevorzugt ist ein $C_{3-10}$-cyloaliphatischer Rest aus der Gruppe ausgewählt, die Cyclopropyl, Cyclobutyl, Cyclopentyl, Cyclohexyl, und Cycloheptyl umfasst.

Der Ausdruck "3-10- gliedriger heterocycloaliphatischer Rest" umfasst vorzugsweise aliphatische gesättigte oder ungesättigte (aber nicht aromatische) cycloaliphatische Reste mit drei bis zehn, d.h. 3, 4, 5, 6, 7, 8, 9 oder 10 Ringgliedern, in denen wenigstens ein, gegebenenfalls auch 2 oder 3 Kohlenstoffatome durch ein Heteroatom wie N, O oder S oder eine Heteroatomgruppe wie NH, N($C_{1-10}$-aliphatischer Rest) oder N($C_{1-10}$-aliphatischer Rest)$_2$ ersetzt ist/sind, wobei die Ringglieder unsubstituiert oder ein- oder mehrfach substituiert sein können. Die Bindung an die übergeordnete allgemeine Struktur kann über jedes beliebige und mögliche Ringglied des heterocycloaliphatischen Restes erfolgen, erfolgt jedoch vorzugsweise über ein Kohlenstoffatom. Bevorzugt sind 3-10- gliedrige heterocycloaliphatische Reste aus der Gruppe umfassend Azetidinyl, Aziridinyl, Azepanyl, Azocanyl, Diazepanyl, Dithiolanyl, Dihydrochinolinyl, Dihydropyrrolyl, Dioxanyl, Dioxolanyl, Dioxepanyl, Dihydroindenyl Dihydropyridinyl, Dihydrofuranyl, Dihydroisochinolinyl, Dihydroindolinyl, Dihydroisoindolyl, Imidazolidinyl, Isoxazolidinyl, Morpholinyl, Oxiranyl, Oxetanyl, Pyrrolidinyl, Piperazinyl, 4-Methylpiperazinyl, Piperidinyl, Pyrazolidinyl, Pyranyl, Tetrahydropyrrolyl, Tetrahydropyranyl, Tetrahydrochinolinyl, Tetrahydroisochinolinyl, Tetrahydroindolinyl, Tetrahydrofuranyl, Tetrahydropyridinyl, Tetrahydrothiophenyl, Tetrahydropyridoindolyl, Tetrahydronaphthyl, Tetrahydrocarbolinyl, Tetrahydroisoxazolopyridinyl, Thiazolidinyl und Thiomorpholinyl.

Der Begriff "Aryl" bedeutet im Sinne dieser Erfindung aromatische Kohlenwasserstoffe mit 6 bis 12 Ringgliedern, vorzugsweise 6 Ringgliedern, u.a. Phenyle und Naphthyle. Jeder Aryl-Rest kann unsubstituiert oder einfach oder mehrfach substituiert vorliegen, wobei die Aryl-Substituenten gleich oder verschieden und in jeder beliebigen und möglichen Position des Aryls sein können. Die Bindung des Aryls an die übergeordnete allgemeine Struktur kann über jedes beliebige und mögliche Ringglied des Aryl-Restes erfolgen. Bevorzugt ist Aryl aus der Gruppe ausgewählt, die Phenyl, 1-Naphthyl und 2-Naphthyl enthält.

Der Begriff "Heteroaryl" steht für einen 5- bis 12-gliedrigen, vorzugsweise 5- oder 6-gliedrigen cyclischen aromatischen Rest, der mindestens 1, ggf. auch 2, 3, 4 oder 5 Heteroatome, enthält, wobei die Heteroatome jeweils unabhängig voneinander ausgewählt sind aus der Gruppe S, N und O und der Heteroaryl-Rest unsubstituiert oder ein- oder mehrfach substituiert sein kann; im Falle der Substitution am Heteroaryl können die Substituenten gleich oder verschieden sein und in jeder beliebigen und möglichen Position des Heteroaryls sein. Die Bindung an die übergeordnete allgemeine Struktur kann über jedes beliebige und mögliche Ringglied des Heteroaryl-Restes erfolgen. Es ist bevorzugt, dass der Heteroaryl-Rest ausgewählt ist aus der Gruppe, die Benzofuranyl, Benzoimidazolyl, Benzothienyl, Benzothiadiazolyl, Benzothiazolyl, Benzotriazolyl, Benzooxazolyl, Benzooxadiazolyl, Chinazolinyl, Chinoxalinyl, Carbazolyl, Chinolinyl, Dibenzofuranyl, Dibenzothienyl, Furyl (Furanyl), Imidazolyl, Imidazothiazolyl, Indazolyl, Indolizinyl, Indolyl, Isochinolinyl, Isoxazoyl, Isothiazolyl, Indolyl, Naphthyridinyl, Oxazolyl, Oxadiazolyl, Phenazinyl, Phenothiazinyl, Phtalazinyl, Pyrazolyl, Pyridyl (2-Pyridyl, 3-Pyridyl, 4-Pyridyl), Pyrrolyl, Pyridazinyl, Pyrimidinyl, Pyrazinyl, Purinyl, Phenazinyl, Thienyl (Thiophenyl), Triazolyl, Tetrazolyl, Thiazolyl, Thiadiazolyl oder Triazinyl umfasst.

Der Ausdruck "über einen $C_{1-6}$-aliphatischen Rest gebundener $C_3$-$C_{10}$-cycloaliphatischer Rest, 3-10- gliedriger heterocycloaliphatischer Rest, 5-12 gliedriger Aryl- oder Heteroaryl-Rest" bedeutet vorzugsweise, dass die genannten Reste die oben definierten Bedeutungen haben und jeweils über einen $C_{1-6}$-aliphatischen Rest an die jeweilige übergeordnete allgemeine Struktur gebunden ist., der verzweigt oder unverzweigt, gesättigt oder ungesättigt unsubstituiert oder einfach oder mehrfach substituiert sein kann.

Wenn ein Rest oder eine Gruppe wie beispielsweise die Gruppe $X^1$ innerhalb der Verbindung (A1) oder ein nicht hydrolysierbarer organischer Rest wie die Reste $R^2$ und $R^3$ innerhalb der Verbindung (A2) mehrfach innerhalb eines Moleküls vorkommt, dann kann dieser Rest oder diese Gruppe jeweils gleiche oder unterschiedliche Bedeutungen haben: steht beispielsweise die Gruppe für $X^1$ für O-$R^a$, wobei $R^a$ für einen $C_{1-6}$-aliphatischen Rest steht, und kommt beispielsweise innerhalb des Moleküls $(M^1)^x(X^1)_a(R^1)$ insgesamt dreimal vor, so kann $X^1$ zum Beispiel dreimal jeweils für O-$C_2H_5$ stehen oder kann einmal für O-$C_2H_5$, einmal für O-$CH_3$ und einmal für O-$C_3H_6$ stehen. Stehen $R^2$ und $R^3$ innerhalb von (A2) jeweils für einen nicht hydrolysierbaren organischen Rest, so kann einer dieser Reste beispielsweise wenigstens eine reaktive funktionelle Gruppe aufweisen und der verbleibende Rest keine reaktive funktionelle Gruppe aufweisen.

Die Reste T, U, V und W stehen jeweils unabhängig voneinander für einen Rest, der 1 bis 30 Kohlenstoffatome aufweist und gegebenenfalls bis zu 10 Heteroatome und Heteroatomgruppen ausgewählt aus der Gruppe bestehend aus O, S und N aufweisen kann. Die Reste T, U, V und W können dabei aliphatisch, heteroaliphatisch, cycloaliphatisch, heterocycloaliphatisch, aromatisch oder heteroaromatisch sein, wobei auch teil(hetero)aromatische Reste möglich sind, d.h. (hetero)aromatisch Reste, die mit wenigstens einer aliphatisch, heteroaliphatischen, cycloaliphatischen, und/oder heterocycloaliphatischen Gruppe substituiert sind. Dem Fachmann ist klar, dass die Reste T, U, V und W bivalent oder trivalent sind und als verbrückende organische Gruppen zwischen zwei oder drei Metall- und/oder Halbmetallatomen fungieren. Steht beispielsweise $R^1$ für $(U)[(M^1)^x(X^1)_c]_2$ so ist U eine trivalente Gruppe, die einen Rest $(M^1)^x(X^1)_a$ mit zwei Resten $[(M^1)^x(X^1)_c]$ verbrückt.

Vorzugsweise haben alle Gruppen $X^1$ innerhalb der als Komponente (A1) eingesetzten Verbindung $(M^1)^x(X^1)_a(R^1)$ die gleiche Bedeutung, besonders bevorzugt stehen alle Gruppen $X^1$ innerhalb der als Komponente (A1) eingesetzten Verbindung $(M^1)^x(X^1)_a(R^1)$ für O-$R^a$, wobei $R^a$ vorzugsweise für einen $C_{1-6}$-aliphatischen Rest, insbesondere einen $C_{1-6}$-Alkyl-Rest, am meisten bevorzugt, worin $R^a$ für Methyl, Ethyl, n-Propyl, iso-Propyl, n-Butyl, iso-Butyl, oder tert-Butyl steht.

Vorzugsweise haben alle Gruppen $X^2$ innerhalb der als Komponente (A2) eingesetzten Verbindung die gleiche Bedeutung, besonders bevorzugt stehen alle Gruppen $X^2$ innerhalb der als Komponente (A2) eingesetzten Verbindung für O-$R^a$, wobei $R^a$ für einen $C_{1-6}$-aliphatischen Rest, insbesondere einen $C_{1-6}$-Alkyl-Rest, am meisten bevorzugt, worin $R^3$ für Methyl, Ethyl, n-Propyl, iso-Propyl, n-Butyl, iso-Butyl, oder tert-Butyl steht.

Vorzugsweise sind

$M^1$ und $M^2$ jeweils unabhängig voneinander ausgewählt sind aus der Gruppe bestehend aus Al, Ti, Zr, Fe, B und Si, besonders bevorzugt ausgewählt aus der Gruppe bestehend aus Al, Ti, Zr und Si, ganz besonders bevorzugt ausgewählt aus der Gruppe bestehend aus Ti, Zr und Si, insbesondere bevorzugt ausgewählt aus der Gruppe bestehend aus Zr und Si, am meisten bevorzugt bedeuten $M^1$ und $M^2$ jeweils Si,

oder $M^1$ ist ausgewählt aus der Gruppe bestehend aus Al, Ti, Zr, Fe, B und Si, besonders bevorzugt ausgewählt aus der Gruppe bestehend aus Al, Ti, Zr und Si, ganz besonders bevorzugt ausgewählt aus der Gruppe bestehend aus Ti, Zr und Si, insbesondere bevorzugt ausgewählt aus der Gruppe bestehend aus Zr und Si, am meisten bevorzugt Si, und $M^2$ steht für Si,

$X^1$ und $X^2$ stehen jeweils unabhängig voneinander für eine Alkoxy-Gruppe O-R$^a$, wobei R$^a$ jeweils für einen $C_{1-6}$-aliphatischen Rest, vorzugsweise für einen $C_{1-6}$-Alkyl-Rest, besonders bevorzugt, worin $R^3$ für Methyl, Ethyl, n-Propyl, iso-Propyl, n-Butyl, iso-Butyl, oder tert-Butyl steht.

Vorzugsweise ist in Schritt (2) des erfindungsgemäßen Verfahrens eingesetzte wässrige Sol-Gel-Zusammensetzung (II) erhältlich durch Umsetzung

wenigstens einer Verbindung (A1) als wenigstens eine Ausgangsverbindung, in der $R^1$ für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, Thiol-Gruppen, Isocyanat-Gruppen, phosphorhaltigen Gruppen, und Gruppen, die eine ethylenisch ungesättige Doppelbindung aufweisen, aufweist,

insbesondere wenigstens einer Verbindung (A1) als wenigstens eine Ausgangsverbindung, in der $R^1$ für einen nicht hydrolysierbaren organischen Rest steht, welcher wenigstens Epoxid-Gruppe als eine reaktive funktionelle Gruppe, aufweist, und gegebenenfalls zudem

wenigstens einer weiteren Verbindung (A1) als wenigstens eine Ausgangsverbindung, in der $R^1$ für einen nicht hydrolysierbaren organischen Rest steht, welcher wenigstens eine reaktive funktionelle Gruppe ausgewählt aus der Gruppe bestehend aus primären Amino-Gruppen und sekundären Amino-Gruppen, aufweist,

und gegebenenfalls wenigstens einer weiteren Verbindung (A1), in der $R^1$ für $X^1$ steht,
und gegebenenfalls wenigstens einer weiteren Verbindung (A1), in der $R^1$ für einen nicht hydrolysierbaren organischen Rest steht, welcher keine reaktive funktionelle Gruppe aufweist,
und gegebenenfalls wenigstens einer Verbindung (A2).

Vorzugsweise die in Schritt (2) eingesetzte wässrige Sol-Gel-Zusammensetzung (II) erhältlich durch Umsetzung

wenigstens einer Verbindung $Si(X^1)_3(R^1)$ als wenigstens eine Verbindung (A1-1),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,

insbesondere wenigstens einer Verbindung $Si(X^1)_3(R^1)$ als wenigstens eine Verbindung (A1-1a),

wobei $R^1$ darin für einen nicht hydrolysierbaren organischen Rest steht, welcher wenigstens eine Epoxid-Gruppe als eine reaktive funktionelle Gruppe, aufweist, und zudem gegebenenfalls

wenigstens einer weiteren Verbindung $Si(X^1)_3(R^1)$ als wenigstens eine weitere Verbindung (A1-1b),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen und sekundären Amino-Gruppen, aufweist,

und gegebenenfalls wenigstens einer Verbindung $Si(X^1)_4$ als wenigstens eine weitere Verbindung (A1-2),

und gegebenenfalls wenigstens einer Verbindung $Si(X^1)_3(R^1)$ als wenigstens eine weitere Verbindung (A1-3),

wobei $R^1$ darin für einen nicht hydrolysierbaren organischen Rest steht, welcher keine reaktive funktionelle Gruppe aufweist.

und gegebenenfalls wenigstens einer Verbindung $Zr(X^1)_4$ als wenigstens eine weitere Verbindung (A1-4),

mit Wasser.

In einer besonders bevorzugten Ausführungsform ist die in Schritt (2) des erfindungsgemäßen Verfahrens eingesetzte wässrige Sol-Gel-Zusammensetzung (II) erhältlich durch Umsetzung

wenigstens einer Verbindung $Si(X^1)_3(R^1)$ als wenigstens eine Verbindung (A1-1),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, insbesondere wenigstens eine Epoxid-Gruppe, aufweist,

und wobei der nicht hydrolysierbare organische Rest vorzugsweise ausgewählt ist aus der Gruppe bestehend aus $C_1$-$C_{10}$-aliphatischen Resten und $C_1$-$C_{10}$-heteroaliphatischen Resten, besonders bevorzugt ausgewählt ist aus $C_1$-$C_{10}$-aliphatischen Resten,

$X^1$ für $OR^a$ steht und $R^a$ für einen $C_{1-6}$-Alkyl-Rest steht,

gegebenenfalls wenigstens einer weiteren Verbindung $Si(X^1)_3(R^1)$ als wenigstens eine weiteren Verbindung (A1-1),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, insbesondere wenigstens eine primäre Amino-Gruppe oder eine sekundäre Amino-Gruppe, aufweist, und wobei der nicht hydrolysierbare organische Rest vorzugsweise ausgewählt ist aus der Gruppe bestehend aus $C_1$-$C_{10}$-aliphatischen Resten und $C_1$-$C_{10}$-heteroaliphatischen Resten, besonders bevorzugt ausgewählt ist aus $C_1$-$C_{10}$-aliphatischen Resten,

$X^1$ für $OR^a$ steht und $R^a$ für einen $C_{1-6}$-Alkyl-Rest steht,

und gegebenenfalls wenigstens einer Verbindung $Si(X^1)_4$ als wenigstens eine weitere Verbindung (A1-2), worin $X^1$ für $OR^a$ steht und $R^a$ für einen $C_{1-6}$-Alkyl-Rest steht,

und gegebenenfalls wenigstens einer Verbindung $Si(X^1)_3(R^1)$ als wenigstens eine weitere Verbindung (A1-3),

wobei $R^1$ darin für einen nicht hydrolysierbaren organischen Rest steht, welcher keine reaktive funktionelle Gruppe aufweist,

und wobei der nicht hydrolysierbare organische Rest vorzugsweise ausgewählt ist aus der Gruppe bestehend aus $C_1$-$C_{10}$-aliphatischen Resten, $C_1$-$C_{10}$-heteroaliphatischen Resten, 5-12 gliedrigen Aryl- oder Heteroaryl-Resten, und über einen $C_{1-6}$-aliphatischen Rest gebundenen 5-12 gliedrigen Aryl- oder Heteroaryl-Resten,

und $X^1$ für $OR^a$ steht und $R^a$ für einen $C_{1-6}$-Alkyl-Rest steht,

und gegebenenfalls wenigstens einer Verbindung $Zr(X^1)_4$ als wenigstens eine weitere Verbindung (A1-4), worin $X^1$ für $OR^a$ steht und $R^a$ für einen $C_{1-6}$-Alkyl-Rest steht,

mit Wasser.

Besonders bevorzugt ist in Schritt (2) eingesetzte wässrige Sol-Gel-Zusammensetzung (II) erhältlich durch Umsetzung

wenigstens einer Verbindung $Si(X^1)_3(R^1)$ als wenigstens eine Verbindung (A1-1a),

wobei $R^1$ darin für einen nicht hydrolysierbaren $C_1$-$C_{10}$-aliphatischen organischen Rest steht, welcher wenigstens eine Epoxid-Gruppe als reaktive funktionelle Gruppe aufweist,

$X^1$ für $OR^a$ steht und $R^a$ für einen $C_{1-6}$-Alkyl-Rest steht,

gegebenenfalls wenigstens einer weiteren Verbindung $Si(X^1)_3(R^1)$ als wenigstens eine weitere Verbindung (A1-1b),

wobei $R^1$ darin für einen nicht hydrolysierbaren $C_1$-$C_{10}$-aliphatischen organischen Rest steht, welcher wenigstens eine primäre Amino-Gruppe als reaktive funktionelle Gruppe aufweist,

$X^1$ für $OR^a$ steht und $R^a$ für einen $C_{1-6}$-Alkyl-Rest steht,

und gegebenenfalls wenigstens einer Verbindung $Si(X^1)_4$ als wenigstens eine weitere Verbindung (A1-2),

worin $X^1$ für $OR^a$ steht und $R^a$ für einen $C_{1-6}$-Alkyl-Rest steht,

und gegebenenfalls wenigstens einer Verbindung $Si(X^1)_3(R^1)$ als wenigstens eine weitere Verbindung (A1-3),

wobei $R^1$ darin für einen nicht hydrolysierbaren organischen $C_1$-$C_{10}$-aliphatischen Rest steht, welcher keine reaktive funktionelle Gruppe aufweist,

und worin der nicht hydrolysierbare organische Rest $R^1$ vorzugsweise ausgewählt ist aus der Gruppe bestehend aus $C_1$-$C_{10}$-aliphatischen Resten, 5-12 gliedrigen Aryl- oder Heteroaryl-Resten, und über einen $C_{1-6}$-aliphatischen Rest gebundenen 5-12 gliedrigen Aryl- oder Heteroaryl-Resten,

und $X^1$ für $OR^a$ steht und $R^a$ für einen $C_{1-6}$-Alkyl-Rest steht,

und gegebenenfalls wenigstens einer Verbindung $Zr(X^1)_4$ als wenigstens eine weitere Verbindung (A1-4), worin $X^1$ für $OR^a$ steht und $R^a$ für einen $C_{1-6}$-Alkyl-Rest steht,

mit Wasser.

Insbesondere bevorzugt ist die wässrige Sol-Gel-Zusammensetzung (II) erhältlich durch Umsetzung

wenigstens einer Verbindung $Si(X^1)_3(R^1)$ als wenigstens eine Verbindung (A1-1a),

wobei $R^1$ darin für einen nicht hydrolysierbaren $C_1$-$C_{10}$-aliphatischen organischen Rest steht, welcher wenigstens eine Epoxid-Gruppe als reaktive funktionelle Gruppe aufweist,

$X^1$ für $OR^a$ steht und $R^a$ für einen $C_{1-6}$-Alkyl-Rest steht,

gegebenenfalls wenigstens einer weiteren Verbindung $Si(X^1)_3(R^1)$ als wenigstens eine weitere Verbindung (A1-1b),

wobei $R^1$ darin für einen nicht hydrolysierbaren $C_1$-$C_{10}$-aliphatischen organischen Rest steht, welcher wenigstens eine primäre Amino-Gruppe als reaktive funktionelle Gruppe aufweist,

$X^1$ für $OR^a$ steht und $R^a$ für einen $C_{1-6}$-Alkyl-Rest steht,

und wenigstens einer Verbindung $Si(X^1)_4$ als wenigstens eine Verbindung (A1-2),

worin $X^1$ für $OR^a$ steht und $R^a$ für einen $C_{1-6}$-Alkyl-Rest steht,

und wenigstens einer Verbindung $Si(X^1)_3(R^1)$ als wenigstens eine weitere Verbindung (A1-3),

wobei $R^1$ darin für einen nicht hydrolysierbaren organischen $C_1$-$C_{10}$-aliphatischen Rest steht, welcher keine reaktive funktionelle Gruppe aufweist,

und worin der nicht hydrolysierbare organische Rest $R^1$ vorzugsweise ausgewählt ist aus der Gruppe bestehend aus $C_1$-$C_{10}$-aliphatischen Resten, 5-12 gliedrigen Aryl- oder Heteroaryl-Resten, und über einen $C_{1-6}$-aliphatischen Rest gebundenen 5-12 gliedrigen Aryl- oder Heteroaryl-Resten, besonders bevorzugt ausgewählt ist aus $C_1$-$C_{10}$-aliphatischen Resten,

und $X^1$ für $OR^a$ steht und $R^a$ für einen $C_{1-6}$-Alkyl-Rest steht,

und gegebenenfalls wenigstens einer Verbindung $Zr(X^1)_4$ als wenigstens eine weitere Verbindung (A1-4), worin $X^1$ für $OR^a$ steht und $R^a$ für einen $C_{1-6}$-Alkyl-Rest steht,

mit Wasser.

Werden zur Herstellung der erfindungsgemäß eingesetzten wässrigen Sol-Gel-Zusammensetzung (II) wenigstens zwei Ausgangsverbindungen eingesetzt wie beispielsweise zwei voneinander verschiedene Verbindungen (A1) wie (A1-1a) und (A1-1b), so liegt das relative Gewichtsverhältnis dieser beiden Komponenten wie beispielsweise (A1-1a) und (A1-1b) zueinander vorzugsweise in einem Bereich von 10:1 bis 1:10, besonders bevorzugt in einem Bereich von 7,5:1 bis 1:7,5, ganz besonders bevorzugt in einem Bereich von 5:1 bis 1:5, insbesondere in einem Bereich von 2:1 bis 1:2.

Werden zur Herstellung der erfindungsgemäß eingesetzten wässrigen Sol-Gel-Zusammensetzung wenigstens drei Ausgangsverbindungen eingesetzt wie beispielsweise drei voneinander verschiedene Verbindungen (A1), beispielsweise die vorstehend als (A1-1), (A1-2) und (A1-3) bezeichneten Verbindungen oder wie beispielsweise drei voneinander verschiedene Verbindungen (A1) wie (A1-1a), (A1-1b) und (A1-2), so liegt das relative Gewichtsverhältnis der Komponenten (A1-1), (A1-2) und (A1-3) oder der Komponenten (A1-1a), (A1-1b) und (A1-2) zueinander vorzugsweise in einem Bereich von 5:1:1 bis 1:1:5 oder in einem Bereich von 5:1:1 bis 1:5:1 oder in einem Bereich von 1:5:1 bis 5:1:1 oder in einem Bereich von 1:5:1 bis 1:1:5 oder in einem Bereich von 1:1:5 bis 5:1:1 oder in einem Bereich von 1:1:5 bis 1:5:1, besonders bevorzugt in einem Bereich von 2:1:1 bis 1:1:2 oder in einem Bereich von 2:1:1 bis 1:2:1 oder in einem Bereich von 1:2:1 bis 2:1:1 oder in einem Bereich von 1:2:1 bis 1:1:2 oder in einem Bereich von 1:1:2 bis 2:1:1 oder in einem Bereich von 1:1:2 bis 1:2:1.

Werden zur Herstellung der erfindungsgemäß eingesetzten wässrigen Sol-Gel-Zusammensetzung wenigstens vier Ausgangsverbindungen eingesetzt wie beispielsweise vier voneinander verschiedene Verbindungen (A1), beispielsweise die vorstehend als (A1-1), (A1-2), (A1-3) und (A1-4) bezeichneten Verbindungen oder beispielsweise die vorstehend als (A1-1a), (A1-1b), (A1-2) und (A1-3) bezeichneten Verbindungen, so liegt das relative Gewichtsverhältnis der Komponenten (A1-1), (A1-2) und (A1-3) sowie (A1-4) bzw. (A1-1a), (A1-1b), (A1-2) und (A1-3) zueinander vorzugsweise in einem Bereich von 5:1:1:1 bis 1:1:1:5 oder von 5:1:1:1 bis 1:1:5:1 oder von 5:1:1:1 bis 1:5:1:1 oder von 1:5:1:1 bis 5:1:1:1 oder von 1:5:1:1 bis 1:1:5:1 oder von 1:5:1:1 bis 1:1:1:5 oder von 1:1:5:1 bis 5:1:1:1 oder von 1:1:5:1 bis 1:5:1:1 oder von 1:1:5:1 bis 1:1:1:5 oder von 1:1:1:5 bis 5:1:1:1 oder von 1:1:1:5 bis 1:5:1:1 oder von 1:1:1:5 bis 1:1:5:1, besonders bevorzugt in einem Bereich von 2:1:1:1 bis 1:1:1:2 oder von 2:1:1:1 bis 1:1:2:1 oder von 21:1:1 bis 1:2:1:1 oder von 1:2:1:1 bis 2:1:1:1 oder von 1:2:1:1 bis 1:1:2:1 oder von 1:2:1:1 bis 1:1:1:2 oder von 1:2:1:1 bis 2:1:1:1 oder von 1:1:2:1 bis 1:2:1:1 oder von 1:1:2:1 bis 1:1:1:2 oder von 1:1:1:2 bis 2:1:1:1 oder von 1:1:1:2 bis 1:2:1:1 oder von 1:1:1:2 bis 1:1:5:1.

In einer ganz besonders bevorzugten Ausführungsform liegt das relative Gewichtsverhältnis der Komponenten (A1-1a), (A1-1b), (A1-2) und (A1-3) zueinander in einem Bereich von 2,2:0,5:1,2:1,2 bis 2:0,5:1:1.

Zur Herstellung der in Schritt (2) des erfindungsgemäßen Verfahrens eingesetzten wässrigen Sol-Gel-Zusammensetzung (II) eignet sich beispielsweise wenigstens eine Verbindung $(M^1)^x(X^1)_a(R^1)$ als Komponente (A1), in der $R^1$ die Bedeutung $X^1$ hat. Beispiele entsprechender Verbindungen sind Tetramethoxysilan (TMOS), Tetraethoxysilan (TEOS), Dimethoxydiethoxysilan, Tetrapropoxysilan, Tetraisopropoxysilan, Tetrabutoxysilan, Titantetraisopropoxid, Titantetrabutoxid, Zirkoniumtetraisopropoxid und Zirkoniumtetrabutoxid.

Zur Herstellung der in Schritt (2) des erfindungsgemäßen Verfahrens eingesetzten wässrigen Sol-Gel-Zusammensetzung eignet sich beispielsweise wenigstens eine Verbindung $(M^1)^x(X^1)_a(R^1)$ als Komponente (A1), in der $R^1$ für einen nicht hydrolysierbaren organischen Rest steht, wobei der nicht hydrolysierbare organische Rest $R^1$ gegebenenfalls wenigstens eine reaktive funktionelle Gruppe aufweisen kann.

Weist der nicht hydrolysierbare organische Rest $R^1$ dabei wenigstens eine Gruppe auf, die eine Vinyl-Gruppe als ethylenisch ungesättigte Doppelbindung enthält, so eignen sich beispielsweise Vinyltrimethoxysilan (VTMS), Vinyltriethoxysilan, Vinyltriisopropoxysilan, Vinyltrichlorsilan, Vinyl-tris(2-methoxy-ethoxy)silan, Vinyltriacetoxysilan, p-Styryltrimethoxysilan, und/oder p-Styryltriethoxysilan als Komponente (A1).

Weist der nicht hydrolysierbare organische Rest $R^1$ dabei wenigstens eine Gruppe auf, die eine (Meth)acryl-Gruppe als ethylenisch ungesättigte Doppelbindung enthält, so eignen sich beispielsweise γ-(Meth)acryloxypropyltrimethoxysilan (MAPTS), γ-(Meth)acryloxypropyltriethoxysilan, γ-(Meth)acryloxypropyltriisopropoxysilan, β-(Meth)acryloxyethyltrimethoxysilan, β-(Meth)acryloxyethyltriethoxysilan, β-(Meth)acryloxyethyltriisopropoxysilan, 3-(Meth)acryloxypropyltriacetoxysilan, (Meth)acrylamidopropyltriethoxysilan, (Meth)acrylamidopropyltrimethoxysilan, (Meth)acrylamidopropyldimethoxyethoxysilan und/oder (Meth)acrylamidopropylmethoxydiethoxysilan als Komponente (A1).

Weist der nicht hydrolysierbare organische Rest $R^1$ dabei wenigstens eine Gruppe auf, die eine Isocyanat-Gruppe enthält, so eignen sich beispielsweise γ-Isocyanatopropyltriethoxysilan und/oder γ-Isocyanatopropyltrimethoxysilan als Komponente (A1).

Weist der nicht hydrolysierbare organische Rest $R^1$ dabei wenigstens eine Gruppe auf, die wenigstens eine primäre und/oder sekundäre Amino-Gruppe enthält, so eignen sich beispielsweise 3-Aminopropyltrimethoxysilan (APS), 3-Aminopropyltriethoxysilan, 3-Aminopropyltriisopropoxysilan, 2-Aminoethyltrimethoxysilan, 2-Aminoethyltriethoxysilan, 2-Aminoethyltriisopropoxysilan, Aminomethyltrimethoxysilan, Aminomethyltriethoxysilan, Aminomethyltriisopropoxysilan, 3-(2-Aminoethyl)aminopropyltrimethoxysilan (AEAPS), 3-(2-Aminoethyl)aminopropyltriethoxysilan, 3-(2-Aminoethyl)aminopropyltriisopropoxysilan, 2-(2-Aminoethyl)aminoethyltrimethoxysilan, 2-(2-Aminoethyl)aminoethyl-triethoxysilan, 2-(2-Aminoethyl)aminoethyltriisopropoxysilan, 3-(3-Aminopropyl)aminopropyltrimethoxysilan, 3-(3-Aminopropyl)aminopropyl-triethoxysilan, 3-(3-Aminopropyl)aminopropyltriisopropoxysilan, Diethylentriaminopropyltrimethoxysilan, Diethylentriaminopropyltriethoxysilan, N-(n-Butyl)-3-aminopropyltrimethoxysilan, N-(n-Butyl)-3-aminopropyltriethoxysilan, N-Cylohexylaminomethyltriethoxysilan, N-Cylohexylaminomethyltrimethoxysilan, N-Ethyl-γ-aminoisobutyltrimethoxysilan, N-Ethyl-γ-aminoisobutyltriethoxysilan, N-(Vinylbenzyl)-2-aminoethyl-3-aminopropyltrimethoxysilan-Hydrochlorid, N-Phenyl-γ-aminopropyltrimethoxysilan, N-Phenyl-γ-aminopropyltriethoxysilan, γ-Ureidopropyltrimethoxysilan, γ-Ureidopropyltriethoxysilan, N-Methyl-[3-(trimethoxysilyl)propyl]carbamat, und/oder N-Trimethoxysilylmethyl-O-methylcarbamat als Komponente (A1).

Weist der nicht hydrolysierbare organische Rest $R^1$ dabei wenigstens eine Gruppe auf, die wenigstens eine Epoxid-Gruppe enthält, so eignen sich beispielsweise 3-Glycidoxypropyltrimethoxysilan (GPTMS), 3-Glycidoxypropyltriethoxysilan, 3-Glycidoxypropyltriisopropoxyoxysilan, 2-Glycidoxyethyltrimethoxysilan, 2-Glycidoxyethyltriethoxysilan, 2-Glycidoxyethyltriisopropoxyoxysilan, β-(3,4-Epoxycyclohexyl)-ethyltrimethoxysilan, und/oder β-(3,4-Epoxycyclohexyl)-ethyltriethoxysilan als Komponente (A1).

Weist der nicht hydrolysierbare organische Rest $R^1$ dabei wenigstens eine Gruppe auf, die wenigstens eine Thiol-Gruppe enthält, so eignen sich beispielsweise 3-Mercaptopropyltrimethoxysilan (MPTMS), 3-Mercaptopropyltriethoxysilan, 3-Mercaptopropyltriisopropoxysilan, 2-Mercaptoethyltrimethoxysilan, 2-Mercaptoethyltriethoxysilan und/oder 2-Mercaptoethyltriisopropoxysilan als Komponente (A1).

Weist der nicht hydrolysierbare organische Rest $R^1$ dabei wenigstens eine Gruppe auf, die phosphorhaltig ist, so eignen sich beispielsweise Dimethylphosphonatoethyltrimethoxysilan, Dimethylphosphonatoethyltriethoxysilan (PHS), Dimethylphosphonatoethyltriisopropoxysilan, Diethylphosphonatoethyltrimethoxysilan, Diethylphosphonatoethyltriethoxysilan (PHS und/oder Diethylphosphonatoethyltriisopropoxysilan als Komponente (A1).

Zur Herstellung der in Schritt (2) des erfindungsgemäßen Verfahrens eingesetzten wässrigen Sol-Gel-Zusammensetzung eignet sich zudem wenigstens eine Verbindung $(M^1)^x(X^1)_a(R^1)$ als Komponente (A1), in der $R^1$ für einen nicht hydrolysierbaren organischen Rest steht, wobei der nicht hydrolysierbare organische Rest $R^1$ keine reaktive funktionelle Gruppe aufweisen kann.

Weist der nicht hydrolysierbare organische Rest $R^1$ dabei keine reaktive funktionelle Gruppe auf, so eignen sich beispielsweise Methyltrimethoxysilan (MTMS), Methyltriethoxysilan (MTES), Methyltripropopxysilan, Methyltriisopropoxysilan, Ethyltrimethoxysilan, Ethyltriethoxysilan, Ethyltripropopxysilan, Ethyltriisopropoxysilan, Octyltrimethoxysilan, Isobutyltriethoxysilan, Isobutyltrimethoxysilan, Octyltriethoxysilan, Hexyltrimethoxysilan, Hexyltriethoxysilan, Decyltrimethoxysilan, Decyltriethoxysilan, Hexaecyltrimethoxysilan, Hexadecyltriethoxysilan, Isooctyltrimethoxysilan, Isooctyltriethoxysilan, Phenyltrimethoxysilan (PHS), Phenyltriethoxysilan, Phenyltripropoxysilan, Phenyltriisopropoxysilan, Benzyltrimethoxysilan, Benzyltriethoxysilan, Benzyltripropoxysilan, Benzyltriisopropoxysilan, Octyltrichlorsilan, Tridecafluorooctyltriethoxysilan, Tridecafluorooctyltrimethoxysilan, 3-Octanoylthio-1-propyltriethoxysilan, 3-Octanoylthio-1-propyltrimethoxysilan, 3-Triethoxysily-N-(1,3-Dimethylbutylidenpropylamin, 3-Chlorpropyltrimethoxysilan und/oder 3-Chlorpropyltriethoxysilan als Komponente (A1).

Zur Herstellung der in Schritt (2) des erfindungsgemäßen Verfahrens eingesetzten wässrigen Sol-Gel-Zusammensetzung eignet sich beispielsweise wenigstens eine Verbindung $(M^1)^x(X^1)_a(R^1)$ als Komponente (A1), in der $R^1$ für $(T)(M^1)^x(X^1)_c$ steht. Beispielsweise eignen sich hier Bis(trimethoxysilyl)ethan, Bis(triethoxysilyl)ethan, Bis-[γ-(triethoxysilyl)propyl]amin, Bis-[γ-(trimethoxysilyl)propyl]amin, Bis(triethoxysilyl-propyl)tetrasulfid und/oder Bis(trimethoxysilylpropyl)tetrasulfid,

Zur Herstellung der in Schritt (2) des erfindungsgemäßen Verfahrens eingesetzten wässrigen Sol-Gel-Zusammensetzung eignet sich beispielsweise wenigstens eine Verbindung $(M^1)^x(X^1)_a(R^1)$ als Komponente (A1), in der $R^1$ für $(U)[(M^1)^x(X^1)_c]_2$ steht. Beispielsweise eignet sich hier Tris-[3-(trimethoxysilyl)propyl]isocyanurat.

Zur Herstellung der in Schritt (2) des erfindungsgemäßen Verfahrens eingesetzten wässrigen Sol-Gel-Zusammensetzung eignet sich beispielsweise wenigstens eine Verbindung $(M^2)^y(X^2)_b(R^2)(R^3)$ als Komponente (A2), in der $R^2$ und $R^3$ unabhängig voneinander jeweils für einen nicht hydrolysierbaren organischen Rest stehen. Beispielsweise eignet sich hier 3-Glycidoxypropylmethyldiethoxysilan, 3-Glycidoxypropylmethyldimethoxysilan, γ-(Meth)acryloxypropylmethyldimethoxysilan, 3-Mercaptopropylmethyldimethoxysilan, 3-Mercaptopropylmethyldiethoxysilan, γ-(Meth)acryloxypropylmethyldiethoxysilan, N-(2-aminoethyl)-3-aminopropylmethyldimethoxysilan, N-(2-aminoethyl)-3-aminopropylmethyldiethoxysilan, 3-Aminopropylmethyldiethoxysilan, 3-Aminopropylmethyldimethoxysilan, Dimethyldimethoxysilan, Dimethyldiethoxysilan, Di-tert.-butoxydiacetoxysilan, Vinyldimethoxymethylsilan, Vinyldiethoxymethylsilan, N-Cyclohexylaminomethylmethyldiethoxysilan, N-Cyclohexylaminomethylmethyldimethoxysilan, (Cyclohexyl)methyldimethoxysilan, Dicyclopentyldimethoxysilan und/oder N-Dimethoxy(methyl)silylmethyl-O-methylcarbamat.

In einer bevorzugten Ausführungsform des erfindungsgemäßen Verfahrens liegt der Festkörpergehalt der in Schritt (2) eingesetzten wässrigen Sol-Gel-Zusammensetzung (II) nach Hydrolyse und Kondensation der wenigstens einen Ausgangsverbindung in einem Bereich von 0,01 bis zu 10 Gew.-%, besonders bevorzugt in einem Bereich von 0,05 bis zu 7,5 Gew.-%, ganz besonders bevorzugt in einem Bereich von 0,1 bis zu 5 Gew.-%, insbesondere in einem Bereich von 0,2 bis zu 2 Gew.-% oder in einem Bereich von 0,2 bis zu 1 Gew.-%, jeweils bezogen auf das Gesamtgewicht der wässrigen Zusammensetzung.

Der Festkörpergehalt der erfindungsgemäß eingesetzten wässrigen Sol-Gel-Zusammensetzung (II) kann dabei aus der Menge der zur Herstellung der Sol-Gel-Zusammensetzung eingesetzten wenigstens einen Ausgangsverbindung mittels Berechnung bestimmt werden. Dieses Verfahren wird insbesondere dann angewendet, wenn der angestrebte Festkörper vorab festgelegt wird und entsprechend eingestellt werden soll. Dabei wird eine Hydrolyse der in der wenigstens einen Ausgangsverbindung enthaltenen hydrolysierbaren Gruppen wie beispielsweise der hydrolysierbaren

Gruppen $X^1$ und zudem eine Kondensation sämtlicher durch eine solche Hydrolyse gebildeter Metall-OH und/oder Halbmetall-OH-Bindungen wie beispielsweise $M^1$-OH Bindungen angenommen. Zur Berechnung des Festkörpergehalts der erfindungsgemäß eingesetzten wässrigen Sol-Gel-Zusammensetzung werden dabei alle gegebenenfalls vorhandenen Einfachbindungen, die zwischen einer nicht hydrolysierbaren Gruppe wie einem nicht hydrolysierbaren organischen Rest wie $R^1$, und einem Metallatom oder Halbmetallatom wie $M^1$ ausgebildet sind, als zum Festkörpergehalt dazugehörend betrachtet und entsprechend mitgezählt. Vorzugsweise wird der Festkörpergehalt der erfindungsgemäß eingesetzten wässrigen Sol-Gel-Zusammensetzung mittels dieser Berechnungsmethode abgeschätzt. Der theoretisch berechnete Festkörpergehalt lässt sich dabei für jede der wenigstens einen Ausgangsverbindung, die zur Herstellung der erfindungsgemäß eingesetzten wässrigen Sol-Gel-Zusammensetzung eingesetzt worden ist, nach der allgemeinen Formel

$$FK_{theo} = \frac{M_{kond}}{M_{start}} \cdot Anteil_{Rezept}$$

berechnen, worin

FK$_{theo}$ = theoretisch berechneter Festkörpergehalt in Gew.-%
M$_{kond}$ = molare Masse der kondensierten Ausgangsverbindung in g/mol
M$_{start}$ = molare Masse der Ausgangsverbindung in g/mol und
Anteil$_{Rezept}$ = Anteil der Ausgangsverbindung in der Zusammensetzung in Gew.-%.

Eine Beispielberechnung zur Bestimmung des theoretisch berechneten Festkörpergehalts einer erfindungsgemäß eingesetzten wässrigen Sol-Gel-Zusammensetzung findet sich im experimentellen Teil (Beispiele und Vergleichsbeispiele) unter Punkt **1**.

Der so theoretisch berechnete Festkörpergehalt ist dann in Einklang mit den Werten der im Folgenden beschriebenen experimentellen Bestimmungsmethode zur Bestimmung des Festkörpers der wässrigen Sol-Gel-Zusammensetzung, wenn die wässrige Sol-Gel-Zusammensetzung keine weiteren von der zur Herstellung der wässrige Sol-Gel-Zusammensetzung wenigstens einen Ausgangsverbindung abweichenden nicht-flüchtigen Bestandteile wie beispielsweise Additive enthält. Bei dieser universell im Rahmen der vorliegenden Erfindung einsetzbaren experimentellen Festkörper-Bestimmungsmethode wird die erfindungsgemäß eingesetzte wässrige Sol-Gel-Zusammensetzung in einer Menge von 2 ± 0,2 g eingewogen und über eine Dauer von 60 Minuten bei einer Temperatur von 130°C gemäß DIN EN ISO 3251 (Datum: 1.6.2008) eingetrocknet.

Gegebenenfalls kann die wässrige Sol-Gel-Zusammensetzung (II) wenigstens ein Additiv enthalten, welches vorzugsweise ausgewählt ist aus der Gruppe bestehend aus hydrolytisch und pyrolytisch hergestellter Kieselsäure, organischen und anorganischen Nanopartikeln, welche jeweils vorzugsweise eine mittlere Teilchengröße im Bereich von 1 bis 150 nm aufweisen, welche mittels dynamischer Lichtstreuung gemäß DIN ISO 13321 (Datum: 1.10.2004) bestimmbar ist, wasserlöslichen oder wasserdispergierbaren organischen Polymeren, oberflächenaktive Verbindungen wie Tenside, Emulgatoren, Antioxidantien, Benetzungsmitteln, Dispergiermitteln, Verlaufshilfsmitteln, Löslichkeitsvermittlern, Entschäumungsmitteln, Stabilisierungsmitteln, vorzugsweise Hitze-Stabilisatoren, Prozess-Stabilisatoren und UV- und/oder Licht-Stabilisatoren, Katalysatoren, Wachsen, Flexibilisierungsmitteln, Flammschutzmitteln, Reaktivverdünnern, Trägermedien, Harzen, Haftvermittlern, Prozesshilfsmitteln, Weichmachern, pulver- und faserförmige Feststoffen, vorzugsweise pulver- und faserförmige Feststoffe ausgewählt aus der Gruppe bestehend aus Füllstoffen, Glasfasern, und Verstärkern, und Gemischen aus den vorstehend genannten Additiven. Der Additiv-Gehalt in der erfindungsgemäß eingesetzten wässrigen Sol-Gel-Zusammensetzung (II) kann dabei je nach Verwendungszweck sehr breit variieren. Vorzugsweise liegt der Gehalt, jeweils bezogen auf das Gesamtgewicht der erfindungsgemäß eingesetzten wässrigen Sol-Gel-Zusammensetzung (II) bei 0,1 bis 10,0 Gew.-%, bevorzugt bei 0,1 bis 8,0 Gew.-%, besonders bevorzugt bei 0,1 bis 6,0 Gew.-%, ganz besonders bevorzugt bei 0,1 bis 4,0 Gew.-% und insbesondere bei 0,1 bis 2,0 Gew.-%, und Mischungen davon.

Vorzugsweise addieren sich die Anteile in Gew.-% aller in der erfindungsgemäß eingesetzten wässrigen Sol-Gel-Zusammensetzung (II) enthaltenen Komponenten und Additive auf insgesamt 100 Gew.-%, bezogen auf das Gesamtgewicht der Zusammensetzung.

**Schritt (2a)**

In einer bevorzugten Ausführungsform umfasst das erfindungsgemäße Verfahren ferner einen Schritt (2a), der vorzugsweise auf den Schritt (1) oder (2), besonders bevorzugt auf den Schritt (2) folgt, aber noch vor einem optionalen Schritt (3) durchgeführt wird, nämlich eine

(2a) Spülung des nach Schritt (2) erhältlichen mit der wässrigen Sol-Gel-Zusammensetzung (II) kontaktierten und mit der Beschichtungszusammensetzung (I) zumindest teilweise beschichteten Substrats mit Wasser und/oder Ultrafiltrat.

**Schritt (2a-1)**

In einer bevorzugten Ausführungsform umfasst das erfindungsgemäße Verfahren ferner einen Schritt (2a-1), der vorzugsweise auf den Schritt (2) oder auf den Schritt (2a) folgt oder aber nach Schritt (1) und noch vor Schritt (2) durchgeführt wird, aber jeweils noch vor einem optionalen Schritt (3) durchgeführt wird, nämlich ein

(2a-1) Kontaktieren des nach Schritt (1) erhaltenen und gegebenenfalls einer Kontaktierung gemäß Schritt (2) unterworfenen mit der autophoretisch abgeschiedenen Beschichtungszusammensetzung zumindest teilweise beschichteten Substrats mit einer wässrigen Nachbehandlungs-Zusammensetzung (NA),

wobei die wässrige Nachbehandlungs-Zusammensetzung (NA),

(NA1) wenigstens eine wasserlösliche Verbindung, welche wenigstens ein Ti-Atom und/oder wenigstens ein Zr-Atom enthält, und

(NA2) wenigstens eine wasserlösliche Verbindung als Quelle für Fluorid-Ionen, welches wenigstens ein Fluor-Atom enthält, umfasst oder

wobei die wässrige Nachbehandlungs-Zusammensetzung (NA)

(NA3) wenigstens eine wasserlösliche Verbindung umfasst, welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist.

Vorzugsweise weisen das wenigstens eine Ti-Atom und/oder das wenigstens eine Zr-Atom dabei die Oxidationsstufe +4 auf. Vorzugsweise enthält die wässrige Nachbehandlungs-Zusammensetzung aufgrund der in ihr enthaltenen Komponenten, vorzugsweise zudem aufgrund der entsprechend gewählten Mengenanteile dieser Komponenten einen Fluoro-Komplex wie beispielsweise ein Hexfluorometallat, d.h. insbesondere Hexafluorotitanat und/oder wenigstens ein Hexafluorozirkonat. Vorzugsweise weist die Nachbehandlungs-Zusammensetzung eine Gesamtkonzentration an den Elementen Ti und/oder Zr auf, die $2{,}5 \cdot 10^{-4}$ mol/L nicht unterschreitet, aber nicht grösser als $2{,}0 \cdot 10^{-2}$ mol/L ist. Die Herstellung solcher Zusammensetzungen ist beispielsweise aus WO 2009/115504 A1 bekannt. Vorzugsweise ist die Nachbehandlungs-Zusammensetzung (NA) eine wässrige Lösung, die Hexafluorozirkonsäure oder ein entsprechendes Salz dieser Säure enthält.

Vorzugsweise enthält die Nachbehandlungs-Zusammensetzung zudem Kupferionen, vorzugsweise Kupfer(II)-Ionen sowie gegebenenfalls eine oder mehrere wasserlösliche und/oder wasserdispergierbare Verbindungen, die wenigstens ein Metallion ausgewählt aus der Gruppe bestehend aus Ca, Mg, Al, B, Zn, Mn und W sowie Mischungen davon enthält, vorzugsweise wenigstens ein Alumosilikat und hierbei insbesondere ein solches, das ein atomares Verhältnis von Al zu Si-Atomen von zumindest 1:3 aufweist. Die Alumosilikate liegen vorzugsweise als Nanopartikel mit einer durch dynamische Lichtstreuung bestimmbaren Teilchengröße im Bereich von 1 bis 100 nm. Die durch dynamische Lichtstreuung bestimmbare Teilchengröße solcher Nanopartikel im Bereich von 1 bis 100 nm wird dabei gemäß DIN ISO 13321 (Datum: 1.10.2004) bestimmt.

Es ist jedoch eine Aufgabe der vorliegenden Erfindung, dass auf eine solche Nachbehandlung des zumindest teilweise zu beschichtenden Substrats mittels einer wässrigen Lösung, die Hexafluorozirkonsäure oder ein entsprechendes Salz dieser Säure enthält, verzichtet werden kann. In einer bevorzugten Ausführungsform umfasst das erfindungsgemäße Verfahren daher keinen Schritt (2a-1).

Die im optionalen Schritt (2a-1) eingesetzte wässrige Nachbehandlungs-Zusammensetzung (NA) weist vorzugsweise eine Temperatur im Bereich von 8°C bis 80°C, noch bevorzugter im Bereich von 10°C bis 75°C, besonders bevorzugt im Bereich von 12°C bis 70°C, ganz besonders bevorzugt im Bereich von 14°C bis 68°C, insbesondere im Bereich von 15°C bis 66°C oder im Bereich von 15°C bis 64°C, noch bevorzugter im Bereich von 17°C bis 62°C, am meisten bevorzugt im Bereich von 18°C bis 60°C auf. In einer anderen bevorzugten Ausführungsform weist die in Schritt (2a) des erfindungsgemäßen Verfahrens eingesetzte wässrige Nachbehandlungs-Zusammensetzung (NA) eine Temperatur in einem Bereich von 20°C bis 80°C, noch bevorzugter im Bereich von 30°C bis 75°C, besonders bevorzugt im Bereich von 40°C bis 70°C, ganz besonders bevorzugt im Bereich von 50°C bis 65°C auf.

Weist die in Schritt (2) des erfindungsgemäßen Verfahrens eingesetzte wässrige Sol-Gel-Zusammensetzung eine Temperatur > 30°C wie beispielsweise in einem Bereich von >30°C bis 70°C, vorzugsweise > 40°C wie beispielsweise in einem Bereich von >40°C bis 70°C, besonders bevorzugt > 50°C wie beispielsweise in einem Bereich von >50°C bis 70°C auf, so weist die im optionalen Schritt (2a-1) eingesetzte wässrige Nachbehandlungs-Zusammensetzung (NA) vorzugsweise eine Temperatur in einem Bereich von 8°C bis 30°C, vorzugsweise in einem Bereich von 10°C bis 28°C, besonders bevorzugt in einem Bereich von 15°C bis 25°C oder 18 bis 23°C auf.

Weist die in Schritt (2) des erfindungsgemäßen Verfahrens eingesetzte wässrige Sol-Gel-Zusammensetzung eine Temperatur < 50°C, vorzugsweise < 40°C, besonders bevorzugt < 30°C, insbesondere eine Temperatur in einem Bereich von 8°C bis 30°C oder 10°C bis 28°C oder 15°C bis 25°C oder 18 bis 23°C auf, so weist die im optionalen Schritt (2a-1) eingesetzte wässrige Nachbehandlungs-Zusammensetzung (NA) vorzugsweise eine Temperatur > 30°C wie beispielsweise in einem Bereich von >30°C bis 70°C, vorzugsweise > 40°C wie beispielsweise in einem Bereich von >40°C bis 70°C, besonders bevorzugt > 50°C wie beispielsweise in einem Bereich von >50°C bis 70°C auf.

**Schritt (2a-2)**

In einer bevorzugten Ausführungsform umfasst das erfindungsgemäße Verfahren ferner einen Schritt (2a-2), der vorzugsweise auf den Schritt (2) oder auf den Schritt (2a) oder auf den Schritt (2a-1) folgt, aber jeweils noch vor einem optionalen Schritt (3) durchgeführt wird, nämlich ein

(2a-2) Kontaktieren des nach Schritt (1) erhaltenen und einer Kontaktierung gemäß Schritt (2) unterworfenen mit der autophoretisch abgeschiedenen Beschichtungszusammensetzung zumindest teilweise beschichteten Substrats mit Wasser.

Das im optionalen Schritt (2a-2) eingesetzte Wasser weist vorzugsweise eine Temperatur im Bereich von 8°C bis 80°C, noch bevorzugter im Bereich von 10°C bis 75°C, besonders bevorzugt im Bereich von 12°C bis 70°C, ganz besonders bevorzugt im Bereich von 14°C bis 68°C, insbesondere im Bereich von 15°C bis 66°C oder im Bereich von 15°C bis 64°C, noch bevorzugter im Bereich von 17°C bis 62°C, am meisten bevorzugt im Bereich von 18°C bis 60°C auf.

In einer anderen bevorzugten Ausführungsform weist das in Schritt (2a-2) des erfindungsgemäßen Verfahrens eingesetzte Wasser eine Temperatur in einem Bereich von 20°C bis 80°C, noch bevorzugter im Bereich von 30°C bis 75°C, besonders bevorzugt im Bereich von 40°C bis 70°C, ganz besonders bevorzugt im Bereich von 50°C bis 65°C auf, insbesondere dann, wenn die in Schritt (2) des erfindungsgemäßen Verfahrens eingesetzte wässrige Sol-Gel-Zusammensetzung eine Temperatur < 50°C, vorzugsweise < 40°C, besonders bevorzugt < 30°C, insbesondere eine Temperatur in einem Bereich von 8°C bis 30°C oder 10°C bis 28°C oder 15°C bis 25°C oder 18 bis 23°C aufweist und/oder die im optionalen Schritt (2a-1) eingesetzte wässrige Nachbehandlungs-Zusammensetzung (NA) eine Temperatur < 50°C, vorzugsweise < 40°C, besonders bevorzugt < 30°C, insbesondere eine Temperatur in einem Bereich von 8°C bis 30°C oder 10°C bis 28°C oder 15°C bis 25°C oder 18 bis 23°C aufweist.

**Schritt (2b)**

Gegebenenfalls umfasst das erfindungsgemäße Verfahren ferner wenigstens einen Schritt (2b), der vorzugsweise auf den Schritt (2) und/oder (2a) und/oder (2a-1) und/oder (2a-2) folgt, aber vorzugsweise noch vor einem optionalen Schritt (3) durchgeführt wird, nämlich das

(2b) Aufbringen wenigstens einer weiteren Lackschicht auf das nach Schritt (2) und/oder (2a) und/oder (2a-1) und/oder (2a-2) erhältliche mit der wässrigen Sol-Gel-Zusammensetzung (II) kontaktierte und mit der Beschichtungszusammensetzung (I) zumindest teilweise beschichtete Substrat.

Mittels des Schrittes (2b) können ein oder mehrere weitere Lackschichten auf das nach Schritt (2) oder nach Schritt (2) und (2a) und gegebenenfalls (2a-1) und/oder (2a-2) erhältliche mit der wässrigen Sol-Gel-Zusammensetzung (II) kontaktierte und mit der Beschichtungszusammensetzung (I) zumindest teilweise beschichtete Substrat aufgebracht werden, wobei die ein oder mehrere weitere Lackschicht wenigstens auf die gemäß Schritt (2) behandelte und gemäß Schritt (1) autophoretisch abgeschiedene Beschichtungszusammensetzung (I) aufgebracht wird. Sollen mehrere Schichten aufgebracht werden, kann Schritt (2b) entsprechend oft wiederholt werden. Beispiele weiterer aufzubringender Lackschichten sind beispielsweise Basislackschichten, Füllerschichten und/oder ein-oder mehrschichtige Decklackschichten. Auch eine Pulverlackschicht kann aufgebracht werden. Dabei kann die autophoretisch abgeschiedene Beschichtungszusammensetzung (I) nach der Kontaktierung gemäß Schritt (2) und einer optionalen Spülung mit Wasser und/oder Ultrafiltrat (gemäß Schritt (2a)) gehärtet werden, wobei diese Härtung vorzugsweise wie nachfolgend beschrieben gemäß einem Schritt (3) erfolgt, bevor eine weitere Schicht wie eine Füllerschicht und/oder eine ein- oder mehrschichtige Decklackschicht aufgebracht wird. Alternativ kann aber die autophoretisch abgeschiedene Beschichtungs-

zusammensetzung (I) nach der Kontaktierung gemäß Schritt (2) und einer optionalen Spülung mit Wasser und/oder Ultrafiltrat gemäß Schritt (2a) nicht gehärtet werden, sondern zunächst eine weitere Schicht wie eine Füllerschicht und/oder eine ein- oder mehrschichtige Decklackschicht aufgebracht werden "Nass-in-Nass-Verfahren"). Nach Aufbringen dieser weiteren Schicht(en) wird in diesem Fall das so erhaltene Gesamtsystem gehärtet, wobei diese Härtung wie nachfolgend beschrieben gemäß einem Schritt (3) erfolgt.

Schritt (2b) des erfindungsgemäßen Verfahrens wird insbesondere für solche metallischen Substrate durchgeführt, die in der Automobilindustrie eingesetzt werden wie beispielsweise Karosserien und deren Teile. Für Substrate, aus denen Bauteile oder Gegenstände hergestellt werden, wie beispielsweise Bauteile von elektrischen Haushaltsprodukten oder Bauteilen aus dem Bereich der Geräteverkleidungen, Fassadenverkleidungen, Deckenverkleidungen, Fensterprofilen, Möbelteile oder Automobil-Innenteile, wird Schritt (2b) vorzugsweise nicht durchgeführt oder allenfalls in einem solchen Schritt (2b) eine Pulverlackschicht auf das nach Schritt (2) oder nach Schritt (2) und (2a) erhältliche mit der wässrigen Sol-Gel-Zusammensetzung (II) kontaktierte und mit der Beschichtungszusammensetzung (I) zumindest teilweise beschichtete Substrat aufgebracht.

### Schritt (3)

In einer bevorzugten Ausführungsform umfasst das erfindungsgemäße Verfahren ferner wenigstens einen Schritt (3), der vorzugsweise auf den Schritt (2) oder auf die Schritte (2) und (2a), sowie jeweils gegebenenfalls (2a-1) und/oder (2a-2) und/oder (2b) folgt, nämlich eine

(3) Aushärtung der nach Schritt (2) oder nach Schritt (2) und (2a) sowie gegebenenfalls (2a-1) und/oder (2a-2) sowie jeweils gegebenenfalls nach wenigstens einem Schritt (2b) erhaltenen zumindest teilweisen Beschichtung auf dem Substrat.

Schritt (3) des erfindungsgemäßen Verfahrens wird vorzugsweise mittels Einbrennen nach Schritt (2) und gegebenenfalls nach wenigstens einem weiteren Schritt (2a) und/oder (2a-1) und/oder (2a-2) und/oder (2b) durchgeführt. Schritt (3) erfolgt vorzugsweise in einem Ofen. Die Aushärtung erfolgt dabei vorzugsweise bei einer Ofentemperatur im Bereich von 140°C bis 200°C, besonders bevorzugt in einem Bereich von 150°C bis 190°C, ganz besonders bevorzugt in einem Bereich von 160°C bis 180°C.

### Zumindest teilweise beschichtetes Substrat

Die vorliegende Offenbarung betrifft zudem ein gemäß dem erfindungsmäßen Verfahren erhältliches zumindest teilweise beschichtetes metallisches Substrat wie ein zumindest teilweise beschichtetes Metallband. Die vorliegende Offenbarung betrifft ferner ein(en) aus einem solchen zumindest teilweise beschichteten Substrat hergestellten Gegenstand oder hergestelltes Bauteil. Solche Bauteile oder Gegenstände können zum Beispiel Karosserien und deren Teile von Automobilen wie Personenkraftwagen, Lastwagen, Motorrädern und Autobussen, und Bauteile von elektrischen Haushaltsprodukten oder auch Bauteilen aus dem Bereich der Geräteverkleidungen, Fassadenverkleidungen, Deckenverkleidungen oder Fensterprofilen sein. Ferner kann es sich dabei um Bauteile oder Gegenstände für Haushaltsgeräte, Möbelteile, Automobil-Innenteile wie beispielsweise Sitzrahmen handeln.

Zumindest teilweise beschichtete metallische Substrate, die mit dem erfindungsgemäßen Verfahren hergestellt werden, weisen vorzugsweise an der Obergrenze der autophoretisch abgeschiedenen Beschichtungszusammensetzung (I) einen Bereich auf, in dem in der eingesetzten wässrigen Sol-Gel-Zusammensetzung (II) enthaltene Metall- und/oder Halbmetallatome angereichert sind, welche auf der Fläche und/oder im Querschnitt mit Energiedisperser-Röntgenspektroskopie (EDX) oder auf der Fläche mit Röntgenphotoelektronen-Spektroskopie (XPS) nachgewiesen werden können.

Besonders bevorzugte durch das erfindungsgemäße Verfahren erhältliche zumindest teilweise beschichtete metallische Substrate sind Substrate, die zumindest teilweise aus Aluminium, Zink oder verzinkten Metallen bestehen.

### Verwendung

Ein weiterer Gegenstand der vorliegenden Erfindung ist eine Verwendung einer wässrigen Sol-Gel-Zusammensetzung (II) zur Nachbehandlung einer durch eine autophoretische Abscheidung einer Beschichtungszusammensetzung (I) zumindest teilweise auf ein metallisches Substrat aufgebrachten autophoretischen Beschichtung durch Kontaktierung der autophoretisch abgeschiedenen Beschichtungszusammensetzung mit der wässrigen Sol-Gel-Zusammensetzung (II) unter Filmbildung vor einer Aushärtung der autophoretisch abgeschiedenen Beschichtung, wobei die wässrige Sol-Gel-Zusammensetzung (II) erhalten wird durch Umsetzung wenigstens einer Ausgangsverbindung, welche wenigstens ein Metallatom und/oder Halbmetallatom und wenigstens zwei hydrolysierbare Gruppen aufweist, und welche ferner wenigstens einen nicht hydrolysierbaren organischen Rest aufweist, mit Wasser.

Alle im Zusammenhang mit dem Einsatz der in Schritt (2) des erfindungsgemäßen Verfahrens eingesetzten wässrigen Sol-Gel-Zusammensetzung (II) hierin zuvor beschriebenen bevorzugten Ausführungsformen sind auch bevorzugte Ausführungsformen der wässrigen Sol-Gel-Zusammensetzung hinsichtlich ihrer Verwendung zur vorstehend genannten Nachbehandlung. Das gleiche gilt für alle im Zusammenhang mit dem Einsatz der in Schritt (1) des erfindungsgemäßen Verfahrens eingesetzten Beschichtungszusammensetzung (I) hierin zuvor beschriebenen bevorzugten Ausführungsformen und zudem für alle im Zusammenhang mit dem erfindungsgemäßen Verfahren genannten Verfahrensschritte.

Bestimmungsmethoden

*VDA-Klimawechseltest nach VDA 621-415*

Dieser Klimawechseltest dient der Ermittlung der Korrosionsbeständigkeit einer Beschichtung auf einem Substrat. Der Klimawechseltest wird für das entsprechend beschichtete Substrat tauchverzinkter Stahl (HDG) durchgeführt. Der Klimawechseltest wird dabei in 6 sogenannten Zyklen durchgeführt. Ein Zyklus besteht dabei aus insgesamt 168 Stunden (1 Woche) und umfasst

a) 24 Stunden einer Salzsprühnebelprüfung gemäß DIN EN ISO 9227 NSS (Datum: 1.9.2012),
b) gefolgt von 8 Stunden einer Lagerung einschließlich Anwärmen gemäß DIN EN ISO 6270-2 vom September 2005, Verfahren AHT,
c) gefolgt von 16 Stunden einer Lagerung einschließlich Abkühlen gemäß DIN EN ISO 6270-2 vom September 2005, Verfahren AHT,
d) 3-fache Wiederholung von b) und c) (insgesamt also 72 Stunden), und
e) 48 Stunden einer Lagerung einschließlich Abkühlen bei belüfteter Klimakammer gemäß DIN EN ISO 6270-2 vom September 2005, Verfahren AHT.

Wird die jeweils eingebrannte Beschichtung der zu untersuchenden Proben noch vor der Durchführung des Klimawechseltests mit einem Messerschnitt bis zum Substrat eingeritzt, so können die Proben hinsichtlich ihres Unterwanderungsgrades gemäß DIN EN ISO 4628-8 (Datum 1.3.2013) untersucht werden, da das Substrat während der der Durchführung des Klimawechseltests entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung.

Die nachfolgenden Beispiele dienen der Erläuterung der Erfindung, sind jedoch nicht einschränkend auszulegen.

Sofern nicht anders angeführt, handelt es sich bei den in Prozenten jeweils um Gewichtsprozente.

**Beispiele und Vergleichsbeispiele**

**1.** Herstellung von erfindungsgemäß eingesetzten wässrigen Sol-Gel-Zusammensetzungen

*Wässrige Sol-Gel-Zusammensetzung S1*

Eine Mischung aus Tetraethoxysilan (TEOS), Methyltriethoxysilan (MTEOS), 3-Glycidylpropyltrimethoxysilan (GLYMO), deionisiertem Wasser und Ameisensäure (85 Gew.-%) wird für 24 Stunden bei Raumtemperatur (18-23°C) gerührt. Danach wird die Mischung unter Rühren mit 3-Aminopropyltriethoxysilan (AMEO) versetzt und für weitere 24 Stunden bei Raumtemperatur gerührt. Es wird eine klare leicht gelbliche Lösung mit einem pH-Wert von 4,5 erhalten.

*Wässrige Sol-Gel-Zusammensetzung S2*

Eine Mischung aus Tetraethoxysilan (TEOS), Methyltriethoxysilan (MTEOS) und 3-Glycidylpropyltrimethoxysilan (GLYMO) wird unter Rühren mit Ethanol (versetzt mit 1 Gew.-% deionisiertem Wasser, bezogen auf das Gesamtgewicht des eingesetzten Ethanols) sowie Zirkoniumtetrabutoxid (80 % in Butanol) versetzt. Nach 15 Minuten Rühren bei Raumtemperatur (18-23°C) wird deionisiertes Wasser, welches zuvor mit Phosphorsäure auf einen pH Wert von 4,0 eingestellt wird, mittels Schlauchpumpe (bei einer Pumpgeschwindigkeit von 0,694 mL/min) zu dieser Mischung gegeben. Die erhaltene Lösung wird für 24 h bei Raumtemperatur (18-23°C) gerührt.

Tabelle 1 gibt einen Überblick über die wässrigen Sol-Gel-Zusammensetzungen S1 und S2:

Tabelle 1.

| Sol-Gel-Zusammensetzung | S1 | S2 |
|---|---|---|
| TEOS / Gew.-% | 0,31 | 0,327 |
| MTEOS / Gew.-% | 0,31 | 0,327 |
| GLYMO / Gew.-% | 0,31 | 0,327 |
| Zirkoniumtetrabutoxid (80%ig in Butanol) / Gew.-% | - | 0,079 |
| Deionisiertes Wasser / Gew.-% | 98,93 | - |
| Ameisensäure (85 Gew.-%) / Gew.-% | 0,04 | - |
| Deionisiertes Wasser (mit Phosphorsäure auf pH = 4,0 eingestellt) / Gew.-% | - | 97,94 |
| Ethanol (versetzt mit 1 Gew.-% deionisiertem Wasser) / Gew.-% | - | 1,0 |
| AMEO / Gew.-% | 0,10 | - |
| Festkörpergehalt / Gew.-% | 0,50 | 0,50 |

Die Gew.-%-Angaben beziehen sich jeweils auf das Gesamtgewicht der wässrigen Sol-Gel-Zusammensetzung.

**2.** Herstellung einer erfindungsgemäß eingesetzten autophoretisch abscheidbaren Beschichtungszusammensetzung

Eine erfindungsgemäß eingesetzte autophoretisch abscheidbare Beschichtungszusammensetzung (AU1) wird in Analogie zu einem dem Fachmann aus US 2004/043155 A1 bekannten Herstellungsverfahren hergestellt (vgl. Beispiel 6 aus US 2004/043155 A1).

Dabei wird ein Epoxid-basiertes polymeres Harz zusammen mit einer MonomerenMischung umfassend n-Butyl(meth)acrylat, (Meth)acrylsäure, Methyl(meth)acrylat, Isobornyl(meth)acrylat, Styrol und einem Hydroxyalkyl(meth)acrylat in Gegenwart wenigstens eines organischen Lösemittels, insbesondere wenigstens eines Alkohols, sowie einem blockierten Isocyanat-Vernetzungsmittel und gegebenenfalls weiterer Additive wie Kettenüberträger, die üblicherweise bei einer Emulsionspolymerisierung eingesetzt werden, sowie wenigstens ein in Wasser gelöstes anionisches Tensid unter Erhalt einer Wasser-in-Öl-Emulsion vermischt. Diese Wasser-in-Öl-Emulsion wird über eine Dauer von 5 Minuten gerührt und dann in einem Fluidizer (Reaktionskammern H210Z und H230Z) überführt, in dem sie dreimal bei 700 bar homogenisiert wird. Die resultierende Miniemulsion wird daraufhin auf 75°C erhitzt. Zu der resultierenden Mischung wird bei dieser Temperatur eine Initiator-Lösung mittels eines Perfusors bei einer Rührgeschwindigkeit von 180 rpm zugetropft. Bei einer Menge von ca. 1 L an Miniemulsion beträgt die Zutropfgeschwindigkeit 20 mL/h. Als Initiator wird tert-Butylhydroperoxid in Kombination mit Natriumformaldehydsulfoxylat als Reduktionsmittel eingesetzt. Nach Beenden des Zutropfens wird auf 18 bis 23°C abgekühlt und für 16 h unter Erhalt einer wässrigen Minidispersion gerührt.

1260 g deionisiertes Wasser werden vorgelegt und dazu nacheinander unter Rühren 202 g der wie vorstehend beschrieben erhaltenen wässrigen Minidispersion, 98 g des von der Firma Henkel kommerziell erhältlichen Produkts Autophoretic Starter 300, 10 g eines Aktivators wie beispielsweise des kommerziell erhältlichen Produkts Aktivator 35 der Firma Henkel, bei welchem es sich um verdünnte Flusssäure handelt, 10 g eines Depolarisierungsmittels wie zum Beispiel $H_2O_2$ oder Bronopol und weitere 420 g deionisiertes Wasser gegeben. Die so resultierende Mischung wird unter Rühren für 24 h ohne Abdeckung gealtert. Gegebenenfalls während dieser Alterung verdunstetes Wasser wird wieder mittels deionisierten Wassers aufgefüllt und die so erhaltene Mischung als Beschichtungszusammensetzung (AU1) eingesetzt.

**3.** Herstellung von beschichteten metallischen Substraten mittels des erfindungsgemäßen Verfahrens (Beispiele B1a, B1b, B2a und B2b) und mittels einen Vergleichsverfahrens (Vergleichsbeispiele V1a, V1b, V2a und V2b; ohne Schritt (2) des erfindungsgemäßen Verfahrens)

Es werden zwei Arten von insgesamt 16 Testblechen T1 (tauchverzinkter Stahl (HDG)) und T2 (Aluminium AA6014 (ALU)) als Beispiele metallischer Substrate eingesetzt (jeweils achtmal T1 und T2).

Diese werden jeweils durch Eintauchen der Bleche in ein Bad enthaltend eine wässrigen Lösung enthaltend die kommerziell erhältlichen Produkte Ridoline 1565-1 (3,0 Gew.-%) und Ridosol 1400-1 (0,3 % Gew.-%) der Firma Henkel sowie Wasser (96,7 Gew.-%) über eine Dauer von 1,5 Minuten bei einer Temperatur von 60°C gereinigt. Danach wird eine mechanische Reinigung (mittels Pinseln) durchgeführt und die Bleche im Anschluss wiederum für eine Dauer von 1,5 Minuten erneut in das Bad eingetaucht.

Die auf diese Weise gereinigten Substrate werden im Anschluss mit Wasser (über die Dauer von 1 Minute) und deionisiertem Wasser (über die Dauer von 1 Minute) gespült.

Im direkten Anschluss an die Reinigung wird ein autophoretisch abscheidbarer Tauchlack auf jedes der gereinigten Testbleche T1 und T2 appliziert, indem das jeweilige Blech jeweils in ein entsprechendes eine autophoretisch abscheidbare Beschichtungszusammensetzung enthaltenes Tauchlackbad getaucht wird. Dabei weist das Tauchlackbad eine Badtemperatur von 30°C auf. Die Eintauchzeit beträgt jeweils 90 Sekunden. Als autophoretisch abscheidbare Beschichtungszusammensetzung wird jeweils die Beschichtungszusammensetzung (AU1) eingesetzt.

Die auf diese Weise beschichteten Substrate werden mit deionisiertem Wasser gespült (Schritt (1a) des Verfahrens).

Danach werden jeweils zwei der mit dem Tauchlack beschichteten Substrate T1 und T2 in ein Bad der wässrigen Sol-Gel-Zusammensetzung S1 für eine Dauer von 1 Minute bei einer Badtemperatur von 60°C eingetaucht (Schritt (2); Beispiele B1a und B1b). Analog werden jeweils zwei der mit dem Tauchlack beschichteten Substrate T1 und T2 in ein Bad der wässrigen Sol-Gel-Zusammensetzung S2 für eine Dauer von 1 Minute bei einer Badtemperatur von 60°C eingetaucht (Schritt (2); Beispiel B2a und B2b). Zudem werden jeweils zwei der mit dem Tauchlack beschichteten Substrate T1 und T2 in ein Bad von deionisiertem Wasser für eine Dauer von 1 Minute bei einer Badtemperatur von 60°C eingetaucht (Vergleichsbeispiel V1a und V1b). Ferner werden jeweils zwei der mit dem Tauchlack beschichteten Substrate T1 und T2 in ein Bad für eine Dauer von 1 Minute bei einer Badtemperatur von 60°C eingetaucht, welches das kommerziell erhältliche Produkt Aquence® E2 Reaction Rinse der Firma Henkel enthält, welches eine wässrige Lösung enthaltend Hexafluorozirkonsäure und Ammoniumhexafluorozirkonat ist (Vergleichsbeispiel V2a und V2b).

Im Anschluss wird jeweils mit deionisiertem Wasser über eine Dauer von 1 Minute gespült (Schritt (2a)). Dabei wird das nach Schritt (2) erhaltene Substrat in ein Bad aus deionisiertem Wasser bei Raumtemperatur (18-23°C) eingetaucht.

Anschließend werden die so erhaltenen Beschichtungen jeweils bei 180°C (Ofentemperatur) über eine Dauer von 25 Minuten eingebrannt.

Die Tabellen 2a und 2b geben einen Überblick über die mittels des erfindungsgemäßen Verfahrens und der Vergleichsverfahren erhaltenen beschichteten Substrate. Jedes der Beispiele B1a, B1b, B2a, B2b, V1a, V1b, V2a und V2b ist wie aus der vorstehend genannten Anzahl an eingesetzten Testblechen ersichtlich zweifach hergestellt worden, um wie unter nachfolgendem Punkt 4. beschrieben eine Doppelbestimmung durchführen zu können.

Tabelle 2a:

|  | Beispiel B1a | Beispiel B1b | Beispiel B2a | Beispiel B2b |
|---|---|---|---|---|
| Substrat | T1 (HDG) | T2 (ALU) | T1 (HDG) | T2 (ALU) |
| in Schritt (2) eingesetzte Sol-Gel-Zusammensetzung | S1 | S2 | S1 | S2 |

Tabelle 2b:

|  | Vergleich beispiel V1a | Vergleich beispiel V1b | Vergleich beispiel V2a | Vergleich beispiel V2b |
|---|---|---|---|---|
| Substrat | T1 (HDG) | T2 (ALU) | T1 (HDG) | T2 (ALU) |

Im Fall der Vergleichsbeispiele V1a und V1b erfolgt wie vorstehend beschrieben anstelle der Durchführung von Schritt (2) des erfindungsgemäßen Verfahrens ein Kontaktieren des mit dem Tauchlack beschichteten Substrats mit deionisiertem Wasser und im Fall von V2a und V2b mit dem kommerziell erhältlichen Fluoridhaltigen Produkt Aquence® E2 Reaction Rinse.

**4.** Untersuchung der Korrosionschutzwirkung der beschichteten Substrate der Beispiele B1 a und B2a sowie der Vergleichsbeispiele V1a und V2a

Alle nachstehenden Prüfungen wurden entsprechend der vorstehend angegebenen Bestimmungsmethode und der entsprechenden Norm durchgeführt. Jeder Wert in der nachstehenden Tabelle 3 ist der Mittelwert aus einer Zweifachbestimmung.

Tabelle 3:

| | Beispiel B1a | Beispiel B2a | Vergleich beispiel V1a | Vergleich beispiel V2a |
|---|---|---|---|---|
| Unterwanderung [mm] gemäß DIN EN ISO 4628-8 nach 6 Zyklen eines VDA-Klimawechseltest nach VDA 621-415 | **1,7** | **2,1** | 3,8 | 2,6 |

Wie aus der Tabelle 3 ersichtlich ist, zeichnen sich die mittels des erfindungsgemäßen Verfahrens hergestellten beschichteten Substrate der Beispiele B1a und B2a im Vergleich zu den Vergleichsbeispielen V1a und V2a insbesondere dadurch aus, dass die Unterwanderung in [mm] nach Durchführung des VDA-Klimawechseltests wesentlich geringer ausfällt.

**Patentansprüche**

1. Ein Verfahren zur zumindest teilweisen Beschichtung eines metallischen Substrats umfassend wenigstens die Schritte

(1) zumindest teilweise autophoretische Beschichtung des Substrats mit einer autophoretisch abscheidbaren Beschichtungszusammensetzung (I), und
(2) Kontaktieren des mit der autophoretisch abgeschiedenen Beschichtungszusammensetzung (I) zumindest teilweise beschichteten Substrats mit einer wässrigen Zusammensetzung unter Filmbildung,

**dadurch gekennzeichnet, dass**
die in Schritt (2) eingesetzte wässrige Zusammensetzung eine wässrige Sol-Gel-Zusammensetzung (II) ist, welche erhalten wird durch Umsetzung wenigstens einer Ausgangsverbindung, welche wenigstens ein Metallatom und/oder Halbmetallatom und wenigstens zwei hydrolysierbare Gruppen aufweist, und welche ferner wenigstens einen nicht hydrolysierbaren organischen Rest aufweist, mit Wasser, und dass
die Durchführung des Schritts (2) vor einer Aushärtung der autophoretisch abgeschiedenen Beschichtung erfolgt.

2. Das Verfahren nach Anspruch 1, **dadurch gekennzeichnet, dass** die in Schritt (2) eingesetzte wässrige Sol-Gel-Zusammensetzung erhalten wird durch Umsetzung wenigstens einer Verbindung

$$(A1) \qquad (M^1)^x(X^1)_a(R^1),$$

und/oder

$$(A2) \qquad (M^2)^y(X^2)_b(R^2)(R^3)$$

mit Wasser, worin

$M^1$ und $M^2$ jeweils unabhängig voneinander für ein Metallatom oder ein Halbmetallatom stehen,
$X^1$ und $X^2$ jeweils unabhängig voneinander für eine hydrolysierbare Gruppe stehen,
x für die Wertigkeit des Metallatoms oder Halbmetallatoms $M^1$ steht,
y für die Wertigkeit des Metallatoms oder Halbmetallatoms $M^2$ steht,
$R^1$ für $X^1$, einen nicht hydrolysierbaren organischen Rest, für $(T)(M^1)^x(X^1)_c$ oder für $(U)[(M^1)^x(X^1)_c]_2$, steht,
$R^2$ für einen nicht hydrolysierbaren organischen Rest steht,
$R^3$ für einen nicht hydrolysierbaren organischen Rest, für $(T)(M^1)^x(X^1)_c$, für $(U)[(M^1)^x(X^1)_c]_2$, für $(V)(M^2)^y(X^2)_d(R^2)$ oder für $(W)[(M^2)^y(X^2)_d(R^2)]_2$ steht,
a für x steht, wenn $R^1$ für $X^1$ steht oder
a für x-1 steht, wenn $R^1$ für einen nicht hydrolysierbaren organischen Rest, für $(T)(M^1)^x(X^1)_c$ oder für $(U)[(M^1)^x(X^1)_c]_2$ steht, jeweils unter der Voraussetzung, dass a mindestens für 2 steht,
b für y-2 steht, unter der Voraussetzung, dass b mindestens für 2 steht,
T, U, V und W jeweils unabhängig voneinander für einen Rest steht, der 1 bis 30 Kohlenstoffatome aufweist und gegebenenfalls bis zu 10 Heteroatome und Heteroatomgruppen ausgewählt aus der Gruppe bestehend aus O, S und N aufweisen kann,

c für x-1 steht, und
d für y-2 steht,

3. Das Verfahren nach Anspruch 2, **dadurch gekennzeichnet, dass**
$X^1$ und $X^2$ jeweils unabhängig voneinander ausgewählt sind aus der Gruppe bestehend aus Halogeniden und Alkoxy-Gruppen $O-R^a$, worin $R^a$ jeweils für einen $C_{1-16}$-aliphatischen Rest steht, und
$M^1$ und $M^2$ jeweils unabhängig voneinander ausgewählt sind aus der Gruppe bestehend aus Al, Ti, Zr, Fe, B und Si.

4. Das Verfahren nach Anspruch 2 oder 3, **dadurch gekennzeichnet, dass** der wenigstens eine nicht hydrolysierbare organische Rest innerhalb der Bedeutungen von $R^1$, $R^2$ und $R^3$ - jeweils unabhängig voneinander - für einen Rest ausgewählt aus der Gruppe bestehend aus $C_1$-$C_{10}$-aliphatischen Resten, $C_1$-$C_{10}$-heteroaliphatischen Resten, $C_3$-$C_{10}$-cycloaliphatischen Resten, 3-10-gliedrigen heterocycloaliphatischen Resten, 5-12 gliedrigen Aryl- oder Heteroaryl-Resten, über einen $C_{1-6}$-aliphatischen Rest gebundenen $C_3$-$C_{10}$-cycloaliphatischen Restes, über einen $C_{1-6}$-aliphatischen Rest gebundenen 3-10- gliedrigen heterocycloaliphatischen Resten, über einen $C_{1-6}$-aliphatischen Rest gebundenen 5-12 gliedrigen Aryl- oder Heteroaryl-Resten steht, wobei jeder diese Reste gegebenenfalls wenigstens eine reaktive funktionelle Gruppe enthalten kann.

5. Das Verfahren nach einem der Ansprüche 2 bis 4, **dadurch gekennzeichnet, dass**
wenigstens eine Verbindung (A1) als wenigstens eine Ausgangsverbindung eingesetzt wird, in der $R^1$ für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, Thiol-Gruppen, Isocyanat-Gruppen, phosphorhaltigen Gruppen, und Gruppen, die eine ethylenisch ungesättige Doppelbindung aufweisen, aufweist,
und gegebenenfalls wenigstens eine weitere Verbindung (A1) als wenigstens eine Ausgangsverbindung eingesetzt wird, in der $R^1$ für $X^1$ steht,
und gegebenenfalls wenigstens eine weitere Verbindung (A1) als wenigstens eine Ausgangsverbindung eingesetzt wird, in der $R^1$ für einen nicht hydrolysierbaren organischen Rest steht, welcher keine reaktive funktionelle Gruppe aufweist.

6. Das Verfahren nach einem der vorstehenden Ansprüche, **dadurch gekennzeichnet, dass** die in Schritt (2) eingesetzte wässrige Sol-Gel-Zusammensetzung erhalten wird durch Umsetzung
wenigstens einer Verbindung $Si(X^1)_3(R^1)$ als wenigstens eine Verbindung (A1),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,

und gegebenenfalls wenigstens einer Verbindung $Si(X^1)_4$ als wenigstens eine weitere Verbindung (A1),
und gegebenenfalls wenigstens einer Verbindung $Si(X^1)_3(R^1)$ als wenigstens eine weitere Verbindung (A1),

wobei $R^1$ darin für einen nicht hydrolysierbaren organischen Rest steht, welcher keine reaktive funktionelle Gruppe aufweist.

und gegebenenfalls wenigstens einer Verbindung $Zr(X^1)_4$ als wenigstens eine weitere Verbindung (A1),
mit Wasser.

7. Das Verfahren nach einem der vorstehenden Ansprüche, **dadurch gekennzeichnet, dass** die in Schritt (2) eingesetzte wässrige Sol-Gel-Zusammensetzung erhalten wird durch Umsetzung
wenigstens einer Verbindung $Si(X^1)_3(R^1)$ als wenigstens eine Verbindung (A1),

wobei $R^1$ darin für einen nicht hydrolysierbaren $C_1$-$C_{10}$-aliphatischen organischen Rest steht, welcher wenigstens eine Epoxid-Gruppe als reaktive funktionelle Gruppe aufweist,

gegebenenfalls wenigstens einer Verbindung $Si(X^1)_3(R^1)$ als wenigstens eine weitere Verbindung (A1),

wobei $R^1$ darin für einen nicht hydrolysierbaren $C_1$-$C_{10}$-aliphatischen organischen Rest steht, welcher wenigstens eine reaktive funktionelle Gruppe ausgewählt aus der Gruppe bestehend aus primären Amino-Gruppen und sekundären Amino-Gruppen, aufweist,

wenigstens einer Verbindung $Si(X^1)_4$ als wenigstens eine weitere Verbindung (A1),
und wenigstens einer Verbindung $Si(X^1)_3(R^1)$ als wenigstens eine weitere Verbindung (A1),

wobei $R^1$ darin für einen nicht hydrolysierbaren organischen $C_1$-$C_{10}$-aliphatischen Rest steht, welcher keine reaktive funktionelle Gruppe aufweist,

und gegebenenfalls wenigstens einer Verbindung $Zr(X^1)_4$ als wenigstens eine weitere Verbindung (A1), mit Wasser.

8. Das Verfahren nach einem der vorstehenden Ansprüche, **dadurch gekennzeichnet, dass** der Festkörpergehalt der in Schritt (2) eingesetzten wässrigen Sol-Gel-Zusammensetzung (II) nach Hydrolyse und Kondensation der zur Herstellung der wässrigen Sol-Gel-Zusammensetzung (II) eingesetzten wenigstens einen Ausgangsverbindung in einem Bereich von 0,01 bis 10 Gew.-%, bezogen auf das Gesamtgewicht der wässrigen Sol-Gel-Zusammensetzung, liegt.

9. Das Verfahren nach einem der vorstehenden Ansprüche, **dadurch gekennzeichnet,**
**dass** die in Schritt (2) eingesetzte wässrige Sol-Gel-Zusammensetzung einen pH-Wert im Bereich von 3,0 bis 6,0 aufweist.

10. Das Verfahren nach einem der vorstehenden Ansprüche, **dadurch gekennzeichnet, dass** es ferner einen Schritt (3) umfasst, nämlich eine (3) Aushärtung der nach Schritt (1) erhaltenen und einer Kontaktierung gemäß Schritt (2) unterworfenen zumindest teilweisen Beschichtung auf dem Substrat.

11. Eine Verwendung einer wässrigen Sol-Gel-Zusammensetzung (II) zur Nachbehandlung einer durch eine autophoretische Abscheidung einer Beschichtungszusammensetzung (I) zumindest teilweise auf ein metallisches Substrat aufgebrachten autophoretischen Beschichtung durch Kontaktierung der autophoretisch abgeschiedenen Beschichtungszusammensetzung mit der wässrigen Sol-Gel-Zusammensetzung (II) unter Filmbildung vor einer Aushärtung der autophoretisch abgeschiedenen Beschichtung, wobei die wässrige Sol-Gel-Zusammensetzung (II) erhalten wird durch Umsetzung wenigstens einer Ausgangsverbindung, welche wenigstens ein Metallatom und/oder Halbmetallatom und wenigstens zwei hydrolysierbare Gruppen aufweist, und welche ferner wenigstens einen nicht hydrolysierbaren organischen Rest aufweist, mit Wasser.

**Claims**

1. Method for at least partly coating a metallic substrate, comprising at least the steps of

(1) at least partly autophoretically coating the substrate with an autophoretically depositable coating composition (I), and
(2) with an aqueous composition, contacting the substrate at least partly coated with the autophoretically deposited coating composition (I), forming a film,

**characterized in that** the aqueous composition used in step (2) is an aqueous sol-gel composition (II) which is obtained by reacting at least one starting compound which has at least one metal atom and/or semimetal atom and at least two hydrolyzable groups, and which further has at least one nonhydrolyzable organic radical, with water, and **in that**
step (2) is carried out before curing of the autophoretically deposited coating.

2. Method according to Claim 1, **characterized in that** the aqueous sol-gel composition used in step (2) is obtainable by reacting at least one compound

(A1) $(M^1)^x(X^1)_a(R^1)$,

and/or

(A2) $(M^2)^y(X^2)_b(R^2)(R^3)$

with water, where

$M^1$ and $M^2$ each independently of one another are a metal atom or a semimetal atom,

$X^1$ and $X^2$ each independently of one another are a hydrolyzable group,

x is the valence of the metal atom or semimetal atom $M^1$,

y is the valence of the metal atom or semimetal atom $M^2$,

$R^1$ is $X^1$, a nonhydrolyzable organic radical, is (T) $(M^1)^x(X^1)_c$ or is (U) $[(M^1)^x(X^1)_c]_2$,

$R^2$ is a nonhydrolyzable organic radical,

$R^3$ is a nonhydrolyzable organic radical, is (T) $(M^1)^x(X^1)_c$, is (U) $[(M^1)^x(X^1)_c]_2$, is (V) $(M^2)^y(X^2)_d(R^2)$ or is (W)$[(M^2)^y(X^2)_d(R^2)]_2$,

a is x if $R^1$ is $X^1$ or

a is x-1 if $R^1$ is a nonhydrolyzable organic radical, is (T) $(M^1)^x(X^1)_c$ or is (U) $[(M^1)^x(X^1)_c]_2$, in each case with the proviso that a is at least 2,

b is y-2,

with the proviso that b is at least 2, T, U, V, and W in each case independently of one another are a radical having 1 to 30 carbon atoms and able optionally to have up to 10 heteroatoms and heteroatom groups selected from the group consisting of O, S, and N,

c is x-1, and

d is y-2.

3. Method according to Claim 2, **characterized in that**

$X^1$ and $X^2$ each independently of one another are selected from the group consisting of halides and alkoxy groups O-$R^a$, where $R^a$ in each case is a $C_{1-16}$ aliphatic radical, and

$M^1$ and $M^2$ each independently of one another are selected from the group consisting of Al, Ti, Zr, Fe, B, and Si.

4. Method according to Claim 2 or 3, **characterized in that** the at least one nonhydrolyzable organic radical within the definitions of $R^1$, $R^2$, and $R^3$ - in each case independently of one another - is a radical selected from the group consisting of $C_1$-$C_{10}$ aliphatic radicals, $C_1$-$C_{10}$ heteroaliphatic radicals, $C_3$-$C_{10}$ cycloaliphatic radicals, 3-10-membered heterocycloaliphatic radicals, 5-12-membered aryl or heteroaryl radicals, $C_3$-$C_{10}$ cycloaliphatic radicals bonded via a $C_{1-6}$ aliphatic radical, 3-10-membered heterocycloaliphatic radicals bonded via a $C_{1-6}$ aliphatic radical, 5-12-membered aryl or heteroaryl radicals bonded via a $C_{1-6}$ aliphatic radical, it being possible for each of these radicals optionally to comprise at least one reactive functional group.

5. Method according to any of Claims 2 to 4, **characterized in that**

as at least one starting compound at least one compound (A1) is used in which $R^1$ is a nonhydrolyzable organic radical which has at least one reactive functional group selected from the group consisting of primary amino groups, secondary amino groups, epoxide groups, thiol groups, isocyanate groups, phosphorus-containing groups, and groups which have an ethylenically unsaturated double bond,

and optionally as at least one starting compound at least one further compound (A1) is used in which $R^1$ is $X^1$,

and optionally as at least one starting compound at least one further compound (A1) is used in which $R^1$ is a nonhydrolyzable organic radical which has no reactive functional group.

6. Method according to any of the preceding claims, **characterized in that** the aqueous sol-gel composition used in step (2) is obtained by reacting at least one compound $Si(X^1)_3(R^1)$ as at least one compound (A1),

where $R^1$ therein is a nonhydrolyzable organic radical which has at least one reactive functional group selected from the group consisting of primary amino groups, secondary amino groups, epoxide groups, and groups which have an ethylenically unsaturated double bond, and optionally at least one compound $Si(X^1)_4$ as at least one further compound (A1),

and optionally at least one compound $Si(X^1)_3(R^1)$ as at least one further compound (A1),

where $R^1$ therein is a nonhydrolyzable organic radical which has no reactive functional group,

and optionally at least one compound $Zr(X^1)_4$ as at least one further compound (A1), with water.

7. Method according to any of the preceding claims, **characterized in that** the aqueous sol-gel composition used in step (2) is obtained by reacting at least one compound $Si(X^1)_3(R^1)$ as at least one compound (A1),

where $R^1$ therein is a nonhydrolyzable $C_1$-$C_{10}$ aliphatic organic radical which has at least one epoxide group as reactive functional group,

optionally at least one compound $Si(X^1)_3(R^1)$ as at least one further compound (A1),

where $R^1$ therein is a nonhydrolyzable $C_1$-$C_{10}$ aliphatic organic radical which has at least one reactive functional group selected from the group consisting of primary amino groups and secondary amino groups,

at least one compound $Si(X^1)_4$ as at least one further compound (A1), and at least one compound $Si(X^1)_3(R^1)$ as at least one further compound (A1),

where $R^1$ therein is a nonhydrolyzable organic $C_1$-$C_{10}$ aliphatic radical which has no reactive functional group,

and optionally at least one compound $Zr(X^1)_4$ as at least one further compound (A1), with water.

8. Method according to any of the preceding claims, **characterized in that** the solids content of the aqueous sol-gel composition (II) used in step (2), after hydrolysis and condensation of the at least one starting compound used for preparing the aqueous sol-gel composition (II), is in a range from 0.01 to 10 wt%, based on the total weight of the aqueous sol-gel composition.

9. Method according to any of the preceding claims, **characterized in that** the aqueous sol-gel composition used in step (2) has a pH in the range from 3.0 to 6.0.

10. Method according to any of the preceding claims, which further comprises a step (3), specifically
(3) fully curing the at least partial coating, obtained according to step (1) and subjected to contacting as per step (2), on the substrate.

11. Use of an aqueous sol-gel composition (II) for aftertreating an autophoretic coating applied at least partly to a metallic substrate by autophoretic deposition of a coating composition (I), by contacting the autophoretically deposited coating composition with the aqueous sol-gel composition (II), forming a film, before curing the autophoretically deposited coating, wherein the aqueous sol-gel composition (II) is obtained by reacting at least one starting compound which has at least one metal atom and/or semimetal atom and at least two hydrolyzable groups, and which further has at least one nonhydrolyzable organic radical, with water.

**Revendications**

1. Procédé de revêtement au moins partiel d'un substrat métallique, comprenant au moins les étapes suivantes :

(1) le revêtement autophorétique au moins partiel du substrat avec une composition de revêtement déposable autophorétiquement (I), et
(2) la mise en contact du substrat au moins partiellement revêtu avec la composition de revêtement déposée autophorétiquement (I) avec une composition aqueuse avec formation d'un film,

**caractérisé en ce que**
la composition aqueuse utilisée à l'étape (2) est une composition sol-gel aqueuse (II), qui est obtenue par mise en réaction d'au moins un composé de départ, qui comprend au moins un atome métallique et/ou un atome semi-métallique et au moins deux groupes hydrolysables, et qui comprend en outre au moins un radical organique non hydrolysable, avec de l'eau, et **en ce que** la réalisation de l'étape (2) a lieu avant un durcissement du revêtement déposé autophorétiquement.

2. Procédé selon la revendication 1, **caractérisé en ce que** la composition sol-gel aqueuse utilisée à l'étape (2) est obtenue par mise en réaction d'au moins un composé

$$(A1) \qquad (M^1)^x(X^1)_a(R^1)$$

et/ou

(A2)     $(M^2)^y(X^2)_b(R^2)(R^3)$

avec de l'eau, dans lesquels

$M^1$ et $M^2$ représentent chacun indépendamment l'un de l'autre un atome métallique ou un atome semi-métallique,

$X^1$ et $X^2$ représentent chacun indépendamment l'un de l'autre un groupe hydrolysable,

x représente la valence de l'atome métallique ou de l'atome semi-métallique $M^1$,

y représente la valence de l'atome métallique ou de l'atome semi-métallique $M^2$,

$R^1$ représente $X^1$, un radical organique non hydrolysable, (T) $(M^1)^x(X^1)_c$ ou (U) $[(M^1)^x(X^1)_c]_2$,

$R^2$ représente un radical organique non hydrolysable,

$R^3$ représente un radical organique non hydrolysable, (T) $(M^1)^x(X^1)_c$, (U) $[(M^1)^x(X^1)_c]_2$, (V) $(M^2)^y(X^2)_d(R^2)$ ou (W) $[(M^2)^y(X^2)_d(R^2)]_2$,

a représente x lorsque $R^1$ représente $X^1$, ou

a représente x-1 lorsque $R^1$ représente un radical organique non hydrolysable, (T) $(M^1)^x(X^1)_c$ ou (U) $[(M^1)^x(X^1)_c]_2$, à condition qu'a représente à chaque fois au moins 2,

b représente y-2, à condition que b représente au moins 2,

T, U, V et W représentent chacun indépendamment les uns des autres un radical qui comprend 1 à 30 atomes de carbone, et peut éventuellement comprendre jusqu'à 10 hétéroatomes et groupes d'hétéroatomes choisis dans le groupe constitué par O, S et N,

c représente x-1, et

d représente y-2.

3. Procédé selon la revendication 2, **caractérisé en ce que**
$X^1$ et $X^2$ sont chacun choisis indépendamment l'un de l'autre dans le groupe constitué par les halogénures et les groupes alcoxy O-$R^a$, les $R^a$ représentant chacun un radical aliphatique en $C_{1-16}$, et
$M^1$ et $M^2$ sont chacun choisis indépendamment l'un de l'autre dans le groupe constitué par Al, Ti, Zr, Fe, B et Si.

4. Procédé selon la revendication 2 ou 3, **caractérisé en ce que** ledit au moins un radical organique non hydrolysable représente dans le cadre des significations de $R^1$, $R^2$ et $R^3$, à chaque fois indépendamment les uns des autres, un radical choisi dans le groupe constitué par les radicaux aliphatiques en Ci-Cio, les radicaux hétéroaliphatiques en Ci-Cio, les radicaux cycloaliphatiques en $C_3$-$C_{10}$, les radicaux hétérocycloaliphatiques de 3 à 10 chaînons, les radicaux aryle ou hétéroaryle de 5 à 12 chaînons, les radicaux cycloaliphatiques en $C_3$-$C_{10}$ reliés par un radical aliphatique en $C_{1-6}$, les radicaux hétérocycloaliphatiques de 3 à 10 chaînons reliés par un radical aliphatique en $C_{1-6}$, les radicaux aryle ou hétéroaryle de 5 à 12 chaînons reliés par un radical aliphatique en $C_{1-6}$, chacun de ces radicaux pouvant éventuellement contenir au moins un groupe fonctionnel réactif.

5. Procédé selon l'une quelconque des revendications 2 à 4, **caractérisé en ce qu'**au moins un composé (A1) est utilisé en tant qu'au moins un composé de départ, dans lequel $R^1$ représente un radical organique non hydrolysable, qui comprend au moins un groupe fonctionnel réactif choisi dans le groupe constitué par les groupes amino primaires, les groupes amino secondaires, les groupes époxyde, les groupes thiol, les groupes isocyanate, les groupes contenant du phosphore et les groupes qui comprennent une double liaison éthyléniquement insaturée,
et éventuellement au moins un autre composé (A1) est utilisé en tant qu'au moins un composé de départ, dans lequel $R^1$ représente $X^1$,
et éventuellement au moins un autre composé (A1) est utilisé en tant qu'au moins un composé de départ, dans lequel $R^1$ représente un radical organique non hydrolysable qui ne comprend pas de groupe fonctionnel réactif.

6. Procédé selon l'une quelconque des revendications précédentes, **caractérisé en ce que** la composition sol-gel aqueuse utilisée à l'étape (2) est obtenue par mise en réaction
d'au moins un composé $Si(X^1)_3(R^1)$ en tant qu'au moins un composé (A1),

$R^1$ y représentant un radical organique non hydrolysable, qui comprend au moins un groupe fonctionnel réactif choisi dans le groupe constitué par les groupes amino primaires, les groupes amino secondaires, les groupes époxyde et les groupes qui comprennent une double liaison éthyléniquement insaturée,

et éventuellement d'au moins un composé $Si(X^1)_4$ en tant qu'au moins un autre composé (A1),
et éventuellement d'au moins un composé $Si(X^1)_3(R^1)$ en tant qu'au moins un autre composé (A1),

$R^1$ y représentant un radical organique non hydrolysable qui ne comprend pas de groupe fonctionnel réactif,

et éventuellement d'au moins un composé Zr(X$^1$)$_4$ en tant qu'au moins un autre composé (A1),
avec de l'eau.

7. Procédé selon l'une quelconque des revendications précédentes, **caractérisé en ce que** la composition sol-gel aqueuse utilisée à l'étape (2) est obtenue par mise en réaction
d'au moins un composé Si(X$^1$)$_3$(R$^1$) en tant qu'au moins un composé (A1)

> R$^1$ y représentant un radical organique aliphatique en Ci-Cio non hydrolysable, qui comprend au moins un groupe époxyde en tant que groupe fonctionnel réactif, éventuellement d'au moins un composé Si(X$^1$)$_3$(R$^1$) en tant qu'au moins un autre composé (A1),
> R$^1$ y représentant un radical organique aliphatique en C$_1$-C$_{10}$ non hydrolysable, qui comprend au moins un groupe fonctionnel réactif choisi dans le groupe constitué par les groupes amino primaires et les groupes amino secondaires,

d'au moins un composé Si(X$^1$)$_4$ en tant qu'au moins un autre composé (A1),
et d'au moins un composé Si(X$^1$)$_3$(R$^1$) en tant qu'au moins un autre composé (A1),

> R$^1$ y représentant un radical aliphatique en C$_1$-C$_{10}$ organique non hydrolysable qui ne comprend pas de groupe fonctionnel réactif,

et éventuellement d'au moins un composé Zr(X$^1$)$_4$ en tant qu'au moins un autre composé (A1),
avec de l'eau.

8. Procédé selon l'une quelconque des revendications précédentes, **caractérisé en ce que** la teneur en solides de la composition sol-gel aqueuse (II) utilisée à l'étape (2) après hydrolyse totale et condensation dudit au moins un composé de départ utilisé pour la fabrication de la composition sol-gel aqueuse (II) se situe dans une plage allant de 0,01 à 10 % en poids, par rapport au poids total de la composition sol-gel aqueuse.

9. Procédé selon l'une quelconque des revendications précédentes, **caractérisé en ce que** la composition sol-gel aqueuse utilisée à l'étape (2) présente un pH dans la plage allant de 3,0 à 6,0.

10. Procédé selon l'une quelconque des revendications précédentes, **caractérisé en ce qu'**il comprend en outre une étape (3), à savoir
(3) un durcissement du revêtement au moins partiel sur le substrat obtenu selon l'étape (1) et soumis à une mise en contact selon l'étape (2).

11. Utilisation d'une composition sol-gel aqueuse (II) pour le traitement ultérieur d'un revêtement autophorétique appliqué au moins partiellement sur un substrat métallique par un dépôt autophorétique d'une composition de revêtement (I) par mise en contact de la composition de revêtement déposée autophorétiquement avec la composition sol-gel aqueuse (II) avec formation d'un film avant un durcissement du revêtement déposé autophorétiquement, la composition sol-gel aqueuse (II) étant obtenue par mise en réaction d'au moins un composé de départ, qui comprend au moins un atome métallique et/ou un atome semi-métallique et au moins deux groupes hydrolysables, et qui comprend en outre au moins un radical organique non hydrolysable, avec de l'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2004043155 A1
- EP 0716627 B1
- WO 2008036259 A1
- WO 2011029680 A1
- WO 2011138290 A1
- WO 2012174424 A1

- DE 19909877 A1
- US 6733837 B1
- WO 2007095927 A1
- EP 1510558 A1
- WO 03090938 A1
- WO 2009115504 A1

### In der Beschreibung aufgeführte Nicht-Patentliteratur

- Römpp Lexikon Lacke und Druckfarben. Georg Thieme Verlag, 1998, 250 ff
- Römpp Lexikon, Lacke und Druckfarben. Georg Thieme Verlag, 1998

- **D. WANG et al.** *Progress in Organic Coatings,* 2009, vol. 64, 327-338
- **S. ZHENG et al.** *J. Sol-Gel. Sci. Technol.,* 2010, vol. 54, 174-187